(19) Europäisches Patentamt

European Patent Office

Office européen des brevets

(11) **EP 0 660 248 B1**

(12) **EUROPEAN PATENT SPECIFICATION**

(45) Date of publication and mention
of the grant of the patent:
**01.03.2000 Bulletin 2000/09**

(51) Int. Cl.[7]: **G06F 17/21**, G06F 3/033

(21) Application number: **94120707.8**

(22) Date of filing: **27.12.1994**

(54) **Word processor**

Textverarbeitungsgerät

Appareil de traitement de texte

(84) Designated Contracting States:
**BE DE FR GB**

(30) Priority: **27.12.1993 JP 35035693**
**02.02.1994 JP 3185594**

(43) Date of publication of application:
**28.06.1995 Bulletin 1995/26**

(73) Proprietor:
**BROTHER KOGYO KABUSHIKI KAISHA**
**Nagoya-shi, Aichi-ken (JP)**

(72) Inventors:
• **Ueno, Hideo,**
**c/o Brother Kogyo Kabushiki Kaisha**
**Nagoya-shi, Aichi-ken (JP)**
• **Nakahigashi, Sachiyo,**
**c/o Brother Kogyo K. Kaisha**
**Nagoya-shi, Aichi-ken (JP)**
• **Nakagawa, Sachiko,**
**c/o Brother Kogyo K. Kaisha**
**Nagoya-shi, Aichi-ken (JP)**
• **Omura, Kengo,**
**c/o Brother Kogyo Kabushiki Kaisha**
**Nagoya-shi, Aichi-ken (JP)**

• **Mori, Masaharu,**
**c/o Brother Kogyo Kabushiki Kaisha**
**Nagoya-shi, Aichi-ken (JP)**
• **Ooshio, Yasuyo,**
**c/o Brother Kogyo Kabushiki Kaisha**
**Nagoya-shi, Aichi-ken (JP)**
• **Ishida, Kazuko,**
**c/o Brother Kogyo Kabushiki Kaisha**
**Nagoya-shi, Aichi-ken (JP)**

(74) Representative:
**Prüfer, Lutz H., Dipl.-Phys. et al**
**PRÜFER & PARTNER,**
**Patentanwälte,**
**Harthauser Strasse 25d**
**81545 München (DE)**

(56) References cited:
**EP-A- 0 497 352** **GB-A- 2 199 968**

• **PATENT ABSTRACTS OF JAPAN vol. 016, no.
327 (P-1387), 16 July 1992 & JP 04 096097 A
(HITACHI LTD;OTHERS: 01), 27 March 1992,**
• **PATENT ABSTRACTS OF JAPAN vol. 016, no.
373 (P-1400), 11 August 1992 & JP 04 118715 A
(NIHON AI ENU ESU:KK), 20 April 1992,**

## Description

BACKGROUND OF THE INVENTION

1. Field of the Invention

The present invention relates to a word processor having a move cursor function for allowing an operator to move a cursor, which indicates the position where text is to be inputted or edited, vertically and horizontally across a display of the word processor.

2. Description of the Related Art

A conventional tape printer was described in Japanese Patent Application Kokai No. HEI-1-85050. The tape printer includes basically a keyboard, a display, and a print mechanism for printing on a print tape (for example, with width of 18 mm or 24 mm) stored in a tape cassette. The tape printer can display text data of inputted characters, codes, and symbols (referred to generically as characters hereinafter) at the same predetermined character sizes used for displaying characters on the screen of a normal word processor. Also various editorial functions are provided with the tape printer. This tape printer can be used for printing file titles and the like on tapes for use as labels to be adhered to various cases and files.

From JP 04-096097 A a word processor is known wherein a scrolling process is performed by a movement quantity corresponding to logical height of characters. In a cursor control the direction of the cursor movement is determined. When the cursor is to be moved downward it is determined whether theoretical row, into which the screen is divided, where the cursor is presently located has its lowermost edge display. If so it is determined whether the next theoretical row has its lowermost edge display. If so the cursor is moved to the lowermost edge of the next theoretical row. If not so the display is scrolled until the lowermost edge of the theoretical row where the cursor is located is within the screen, the display is scrolled until the lowermost edge of the next theoretical row is displayed. Thereafter, the cursor is moved to the lowermost edge of the display.

The present inventors thought of displaying inputted character strings as print images. That is, based on predetermined print format information (text information), the displayed image of a character string is produced to appear the same as the character string will appear when printed on a tape. Display dot pattern data for a plurality of display character sizes, which correspond to a plurality of print character sizes for printed characters, are stored in a font ROM provided in the control device of the tape printer. When several lines of characters are inputted through the keyboard, the text data for the inputted characters is displayed on the display as print images using display dot pattern data for the display character size that corresponds to the set print character size.

Movement of the cursor is controlled using the cursor movement routine of a normal word processor. The cursor movement routine produces move cursor right commands and move cursor left commands when the move cursor right and move cursor left keys are operated. These commands cause the cursor to move horizontally so as to be displayed on adjacent characters in the same line. The cursor movement routine also produces move cursor up commands and move cursor down commands when the move cursor up and move cursor down keys are operated. These commands cause the cursor to move to the next line in the indicated direction. The cursor is moved to a character position in the next line that is the same number of character positions from the extreme left-hand side of the display as the character position of the original line.

For example, assuming that the character string ABC is displayed above the character string DEF and that the cursor is displayed on the character F (i.e., at the third character position from the lefthand side in the lower line), if the move cursor up key is pressed, the cursor will move to the character position C, which is the third character position from the lefthand side in the upper line.

The tape printer is capable of displaying on the display several lines of inputted text as Print images to allow visual confirmation. However, the width at which characters are printed out differs with individual characters. This is particularly the case for characters of occidental languages such as the letters of the English alphabet. Therefore, the same number of character positions from the extreme left-hand side of different lines often indicate positions that are not aligned on a straight vertical line. This causes the cursor to zigzag greatly left and right across the display when moving vertically according to move cursor up and down commands inputted using the move cursor up or move cursor down key.

This is particularly a problem when the characters of different lines are produced at different character sizes or different fonts. For example, if the characters of the first line are produced with a small character size and the characters of the second and following lines are produced with a large character size, the character width of characters in the first line will be very different from the character width of characters in the second and following lines. Therefore, when move cursor up or down commands are inputted, the zigzag movement becomes particularly noticeable. Because operators expect move cursor up or down commands to move the cursor to positions directly above or below the present cursor position, the greatly zigzagging cursor appears to move randomly and chaotically across the screen. Also, to move the cursor directly up or down requires additional move cursor right or move cursor left commands, thus making operations troublesome.

## SUMMARY OF THE INVENTION

It is therefore an objective of the present invention to provide a word processor with an improved cursor movement function by which the cursor can be moved substantially vertically across the display even when inputted text is displayed in a print image.

To attain the above objectives a word processor according to the present invention comprises the features of claim 1. It includes input means, data memory means, display means, display font memory means, display data production means, display control means, cursor position memory means, character position memory means, and cursor target position calculation means. The input means is adapted for inputting characters and commands including cursor vertical movement commands for moving a cursor vertically across a display. The data memory means is adapted for storing inputted character data that represents inputted characters that are inputted via the input means. The display means includes the display which is capable of displaying the cursor and characters in a plurality of lines (horizontal direction). The display font memory means is adapted for storing display dot pattern data for each of the plurality of characters. The display data production means is adapted for retrieving from the display font memory means display dot pattern data for the inputted character data stored in the data memory means and for composing display dot image data. The display dot image data allows display of the inputted characters on the display means in an image that appears identical to when the inputted characters are printed out. The display control means is adapted for receiving the display dot image data composed in the display data production means and for controlling the display means to display the display dot image data. The cursor position memory means is adapted for setting and storing, each time a character and each time a command is inputted through the input means, present cursor position data on a present cursor position where the cursor is presently displayed on the display means. The character position memory means is adapted for receiving display dot image data composed in the display data production means, for calculating and storing, each time a character and each time a command is inputted through the input means, display character position data representing positions on the display of each of the inputted characters in each line based on the character width data included in the display dot image data. The cursor target position calculation means is adapted for calculating, based on data from the cursor position memory means on the present cursor position and based on data from the character position memory means on display character positions, target cursor position data each time a cursor vertical move command is inputted through the input means and for outputting the target cursor position data to the display control means.

In a further aspect of the present invention, a word processor further includes a standard position memory means adapted for, each time a character and each time a command is inputted through the input means, retrieving the present cursor position data from the cursor position memory means and for producing from the present cursor position data standard vertical data that represents on the display a standard vertical line on which vertical movements of the cursor are based.

Further preferred developments are given in the dependent claims.

## BRIEF DESCRIPTION OF THE DRAWINGS

The above and other objects, features and advantages of the invention will become more apparent from reading the following description of the preferred embodiment taken in connection with the accompanying drawings in which:

Fig. 1 is a perspective view of a tape printer according to preferred embodiments of the present invention;
Fig. 2 A is a schematic plane view of a print mechanism employed in the tape printer, with a tape cassette loaded therein;
Fig. 2 B is a schematic cross-sectional view taken along a line IIIB-IIIB of Fig. 2 A;
Fig. 3 is a block diagram of the control system in the tape printer;
Fig. 4 is a table showing data included in a printable width table stored in a ROM of the control system shown in Fig. 3;
Fig. 5A is a table showing data included in a character size conversion table stored in the ROM of the control system shown in Fig. 3;
Fig. 5B is a table showing data included in an index table stored in the ROM of the control system shown in Fig. 3;
Fig. 6 is a flowchart showing basic steps in a tape print routine of the preferred embodiments;
Fig. 7 is a flowchart showing basic steps in a print image display routine of the preferred embodiments;
Fig. 8 is a flowchart showing basic steps in a move cursor right routine of the first preferred embodiment;
Fig. 9 is a flowchart showing basic steps in a move cursor left routine of the first preferred embodiment;
Fig. 10 is a flowchart showing basic steps in a move cursor down routine of the first preferred embodiment;
Fig. 11 is a flowchart showing basic steps in a move cursor up routine of the first preferred embodiment;
Fig. 12 is a schematic view showing a text memory and of the tape printer with various text data and format information data stored therein and showing a character position information memory with character position data corresponding to the text data in the text memory;

Fig. 13 is a schematic view showing display of characters and a cursor according to the first preferred embodiment when data is stored in the text memory as shown in Fig. 12;

Fig. 14 is a schematic view showing an example of vertical movement of the cursor according to the first preferred embodiment;

Fig. 15 is a schematic view showing an example of vertical movement of the cursor according to the first preferred embodiment;

Fig. 16 is a schematic view showing an example of vertical movement of the cursor according to the first preferred embodiment;

Fig. 17 A is a flowchart showing basic steps in a move cursor right routine of the second and third preferred embodiments;

Fig. 17 B is a flowchart showing basic steps in a move Cursor right routine of the second and third preferred embodiments;

Fig. 18 A is a flowchart showing basic steps in a move cursor down routine of the second preferred embodiment;

Fig. 18 B is a flowchart showing basic steps in a move cursor up routine of the second preferred embodiment;

Fig. 18 C is a schematic view showing a text memory and of the tape printer with various text data and format information data stored therein and showing a character position information memory with character position data corresponding to the text data in the text memory;

Fig. 19 is a schematic view showing display of characters and a cursor according to the second preferred embodiment when data is stored in the text memory as shown in Fig. 18 C;

Fig. 20 is a schematic view showing an example of vertical movement of the cursor according to the second preferred embodiment;

Fig. 21 is a schematic view showing an example of vertical movement of the cursor according to the second preferred embodiment;

Fig. 22 is a schematic view showing an example of vertical movement of the cursor according to the second preferred embodiment;

Fig. 23 is a flowchart showing basic steps in a move cursor down routine of the third preferred embodiment;

Fig. 24 is a flowchart showing basic steps in a move cursor up routine of the third preferred embodiment;

Fig. 25 is a schematic view showing display of characters and a Cursor according to the third preferred embodiment when data is stored in the text memory as shown in Fig. 18 C;

Fig. 26 is a schematic view showing an example of vertical movement of the cursor according to the third preferred embodiment; and

Fig. 27 is a schematic view showing an example of vertical movement of the cursor according to the third preferred embodiment.

## DETAILED DESCRIPTION OF THE PREFERRED EMBODIMENTS

A word processor according to preferred embodiments of the present invention will be described while referring to the accompanying drawings wherein like parts and components are designated by the same reference numerals to avoid duplicating description. In the preferred embodiments, the present invention is applied to a tape printer capable of printing various alphanumeric letters, symbols, and bar codes (referred to generically as characters hereinafter) onto a print tape.

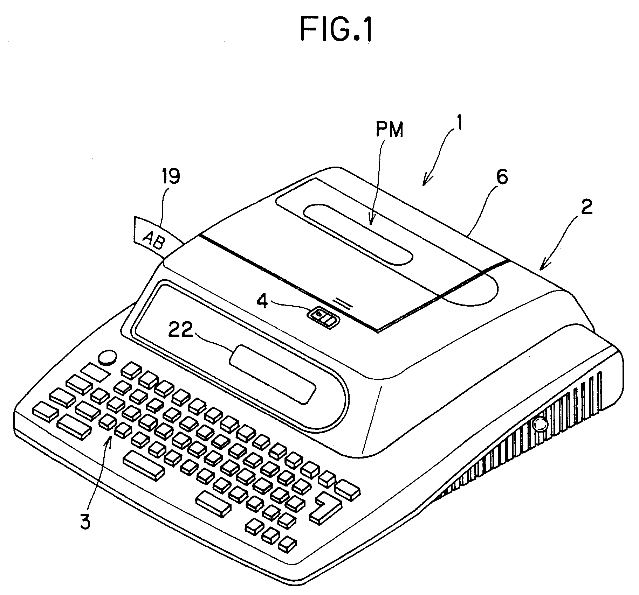

As shown in Fig. 1, in a word processor according to a first preferred embodiment of the present invention, a keyboard 3 is disposed in front of a body frame 2 of a tape printing apparatus 1, a printing mechanism PM is provided at the rear of the keyboard 3 and within the body frame 2, and a liquid crystal display 22 capable of displaying inputted characters as print-like images is disposed just behind the keyboard 3. The display unit 22 has a screen composed on 32 dots in the vertical direction high and 121 dots in the horizontal. A release button 4 is provided for opening a cover frame 6 when a tape containing cassette CS is to be loaded in the or removed from a printing mechanism PM

On the keyboard 3 there are arranged a variety of keys as character keys for inputting characters of a desired text to be printed; a space key; a return carriage key; cursor moving keys for moving a vertical linear cursor K horizontally and vertically on the display 22; format setting keys for changing and setting format information on character enhancement, the character size at which characters are to be printed, and the like; an enter key for entering each of various setting processes; a print key for commanding printing operations; and a power key for turning power on and off.

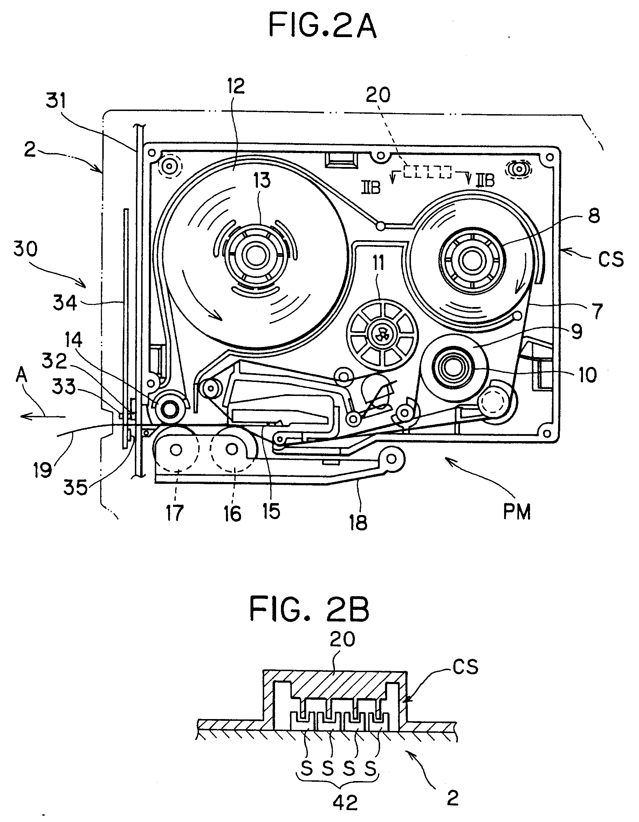

The printing mechanism PM will be described in detail while referring to Fig. 2 A. The rectangular, tape containing cassette CS is removably loaded in the printing mechanism PM. Within the tape containing cassette CS, there are rotatably provided a tape spool 8 around which a transparent laminate film 7 is wound; a ribbon supply spool 10 around which a print ribbon 9 is wound; a take-up spool 11 for taking up the print ribbon 9; a supply spool 13 around which a double coated tape 12 with the same width as the laminate film 7 is wound with its peel-off paper on the outside; and a joining roller 14 for adhering the double-coated tape 12 to the laminate film 7. The double-coated tape 12 includes a base tape, on both sides of which are formed adhesive layers, and a peel-off paper attached to the adhesive layer on one side of the base tape.

A thermal head 15 is installed upright in the position where the laminate film 7 and the print ribbon 9 overlap each other. A platen roller 16, for pressing the laminate film 7 and the print ribbon 9 against the thermal head 15, and a feed roller 17, for pressing the laminate film 7 and the double coated tape 12 against the joining roller 14 to thereby form the print tape 19, are pivotally supported for rotation on a support member 18 which is pivotally rotatably mounted on the body frame 2. On the thermal head 15, there is provided a group of heating elements formed of a train of 128 heating elements arranged in the vertical direction.

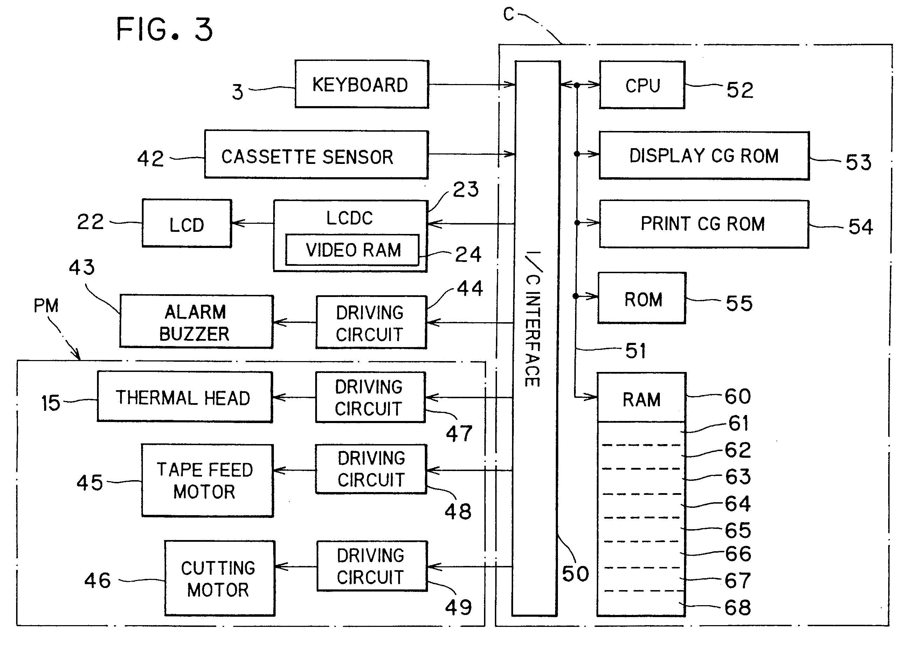

Accordingly, when electric current is passed through the heating elements while the joining roller 14 and the take-up spool 11 are driven in their predetermined rotation directions in synchronism with each other by rotation of a tape feed motor 45 (refer to Fig. 3) in its predetermined rotating direction, characters are printed on the laminate film 7 using plural trains of dots. Then, the double coated tape 12 is attached to the laminate film 7 and the tape is fed, as the print tape 19, in the tape feeding direction A to be discharged from the body frame 2 as shown in Figs. 2 and 3. Details of the printing mechanism PM are described in United States Patent No. 5,188,469, the disclosure of which is hereby incorporated by reference.

Referring to Fig. 2 A, a manual cutting mechanism 30 for cutting the print tape 19 will be described in detail below. Just inside the body frame 2, there is provided a plate-formed auxiliary frame 31 in an upright posture and a stationary blade 32 that is fixedly attached to the auxiliary frame 31 so as to face in an upward direction. An operating lever 34 extended in the direction from front to rear is rotatably supported at its portion closer to the front end of the tape printer on a pivot shaft 33 that is fixedly attached to the auxiliary frame 31. A movable blade 35 is fixedly attached to the operating lever 34 in front of the pivot shaft 33 such that it opposes the stationary blade 32. The rear end portion of the operating lever 34 is structured so as to be vertically swingable via a swing drive mechanism (not shown) that is coupled to a cutting motor 46 (see Fig. 3). Normally, the movable blade 35 is held apart from the stationary blade 32.

The print tape 19 having text printed thereon passes through the space between the stationary blade 32 and the movable blade 35 and sticks out of the body frame 2. Then, a cut signal drives the cutting motor 46 to cause the swing drive mechanism to vertically swing the rear end of the operation level 34. The swinging motion causes the moving blade 35 to approach the fixed blade 32 so as to cut the print tape 19.

The print tape 19 to be fed from the tape containing cassette CS (i.e., the double-coated tape 12 and the laminate film 7 mounted in the cassette CS) is provided in five different widths: 6 mm, 9 mm, 12 mm, 18 mm, and 24 mm. On the bottom wall of each tape containing cassette CS, there is provided a projecting piece 20. The projecting piece 20 formed on each tape cassette CS is for indicating a tape width of a tape 19 i.e., the width of the double-coated tape 12 and the laminate film 7 that is mounted in the cassette CS. Because the tape width is one of the five tape widths, the projecting piece 20 formed on each tape cassette CS is formed with four projecting claws for distinguishing in combination one from the five tape widths.

As shown in Fig. 2 B, a cassette sensor 42 is provided on the body frame 2 at a position with which the projecting piece 20 of the tape cassette CS will be brought into confrontation when the tape cassette CS is loaded in the printing mechanism portion PM. The cassette sensor 42 is for detecting the condition of the projecting claws of the projecting piece 20 to thereby detect the tape width of a tape 19 housed in the tape cassette CS that is loaded in the printing mechanism portion PM.

The cassette sensor 42 is made from four photocouplers S, each having a light-emitting diode paired with a photodetector. Each of the four photocouplers is located at a position capable of receiving a corresponding projecting claw of the projecting piece 20. Each photosensor is therefore for detecting whether or not the corresponding projecting claw is inserted between the light-emitting diode and the photodetector. Illustratively, the cassette sensor 42 outputs a cassette signal "0100" for a tape width of 24 mm, a cassette signal "1100" for a tape width of 12 mm, or a cassette signal "0000" when not tape cassette CS is mounted.

The control system of the tape printing apparatus 1 is constituted as shown in the block diagram of Fig. 3.

A control unit C includes a CPU 52 and a I/O interface 50, a display CG (character generator) ROM 53, a print CG (character generator,) ROM 54, a ROM 55 and a RAM 60 which are connected to the CPU 52 via a bus 51 such as a data bus.

The I/O interface 50 of the control unit C is connected to the keyboard 3; the cassette sensor 42; an LCD controller 23, with a video RAM 24, for outputting display data to the LCD unit 22; a driving circuit 44 for activating an alarm buzzer 43; a driving circuit 47 for driving the thermal head 15; a driving circuit 48 for driving the tape feed motor 45; and a driving circuit 49 for driving the cutting motor 46.

The display CGROM 53 stores display dot pattern data with respect to code data of each of a plurality of characters at each of six display character sizes (that is, 7, 10, 16, 21, 32, and 32 big dot) for each of a plurality of fonts (such as Gothic, Ming type, etc). The display character size defined as the 32 big dot is a display character size that allows display of certain characters, that do not extend below the character base line, at a size larger than the standard 32-dot character size. Capital alphabetic letters are an example of characters to which 32 big dot display character size can be applied.

The print CGROM 54 stores print dot pattern data with respect to code data of each of a plurality of characters at each of seven print character sizes (i.e., 6-point 16-dot, 10-point 24-dot, 13-point 32-dot, 19-point 48-dot, 26-point 64-dot, 38-point 96-dot sizes, and 44-point 96-big-dot) for each of the plurality of fonts. The display character size defined, as 44-point, 96-big-dot size is a display character size that allows display of certain characters, that do not extend below the character base line, at a size larger than the standard 96-dot character size. Capital alphabetic letters are an example of characters to which 44-point, 96-big-dot print character size can be applied.

The ROM 55 contains a display drive routine; a print drive routine; and a tape print routine. The display drive routine controls the LCD controller 23 in response to the code data for the characters that are inputted from the keyboard 3. The print drive routine drives the thermal head 15 and tape feed motor 45 by consecutively retrieving data from a print data buffer 66. The tape print routine is specific to this invention and will be described later in more detail.

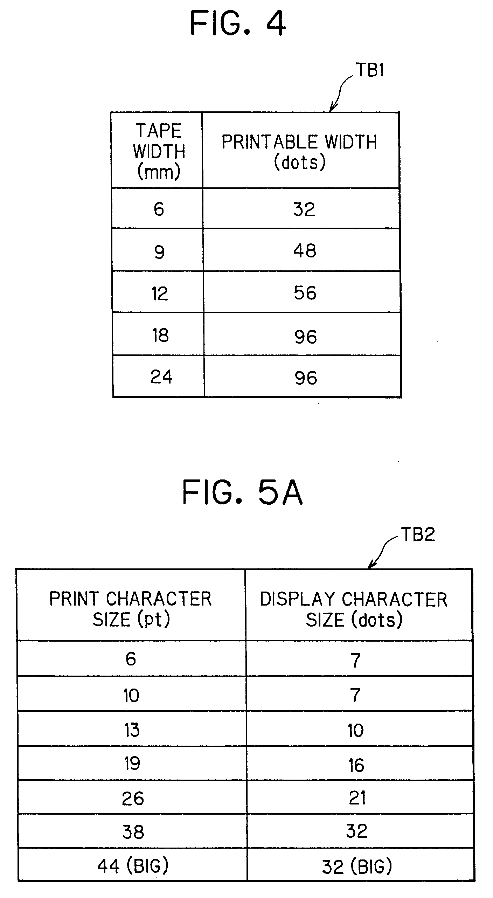

The ROM 55 stores a printable range table TB1 (depicted in Fig. 4) and a character size conversion table TB2 (depicted in, Fig. 5A). The printable width table TB1 lifts tape widths (in mm) of print tapes 19 with various widths in correspondence with the width (in dots) across the portion of each width print tape on which printing can be performed. The character size conversion table TB2 lists print character sizes (points) SZ in correspondence with display character sizes (dots) at which characters should be displayed when characters are to be printed at a corresponding print character size.

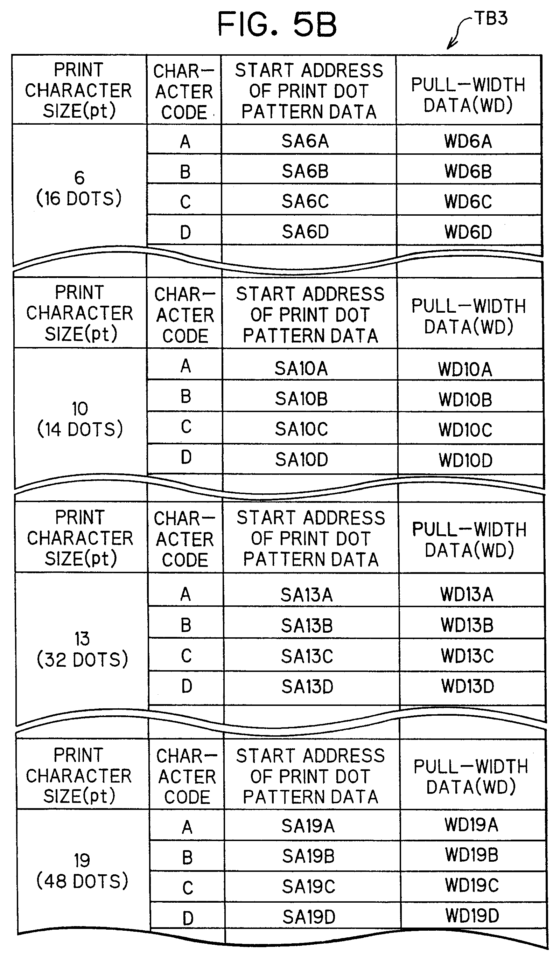

The ROM 55 also contains a print character search table and a print character index table. The print character search tabel lists seven print character sizes in correspondence with index addresses in the print CGROM 54 where print dot pattern data is stored for series of characters for each of the seven print character sizes. The print character index table lists the above index addresses in correspondance with those start addresses in the print CGROM 54 where print dot pattern data of each character in the series is stored. These two tables are shown in combination form as index table TB3 in Fig. 5B.

Furthermore, the ROM 55 includes a display character search table and a display character index table (both not shown). The display character search table lists six display character sizes in correspondence with those start addresses (index addresses) in the display CGROM 53 where display dot pattern data is stored for each series of characters for each of the six display character sizes. The display character index table lists the above index addresses in correspondence with those start addresses in the display CGROM 53 where display dot pattern data of various characters are stored.

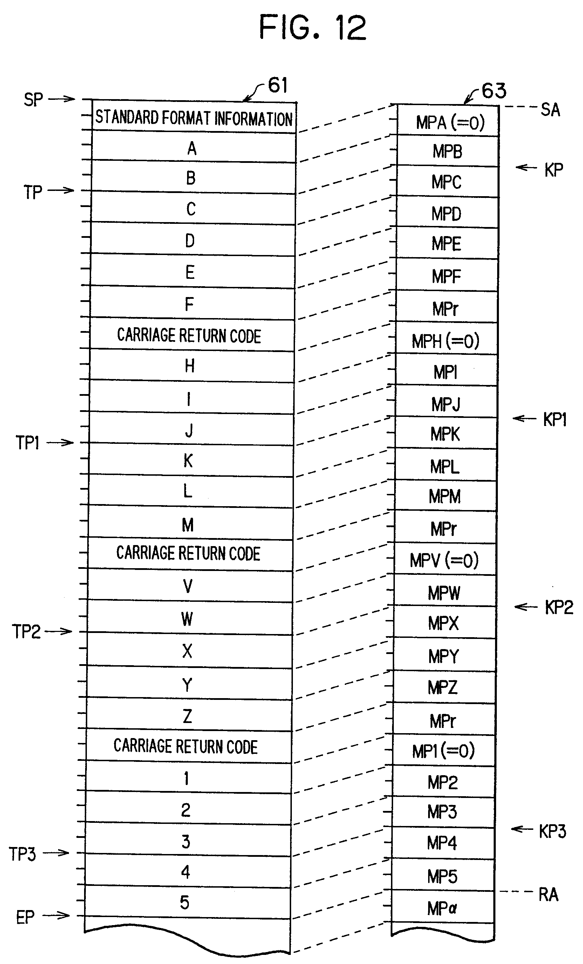

The RAM 60 is partitioned into several memories and buffers. For example, a text memory 61 is provided for accommodating text data inputted from the keyboard 3. A parameter buffer 62 is provided for storing a start address pointer value SP for designating the start address in the text memory 61; an end address pointer value EP for designating the end address in the text memory 61; a data count value DC; and print character size data SZ. A character position information memory 63 is provided for storing character position data MP on positions on the display 22 where characters (including the cursor K) are located. The character position data MP indicates positions of characters as the range on the display 22 occupied by the character in question. The range occupied by each character is determined by adding widths of characters from the far left of the display to the Position of the character in question. As shown in Fig. 12, character position data MP is stored in the character position information memory 63 for each inputted character code stored in the text memory 61.

A text pointer memory 64 is provided for storing a text pointer value TP for indicating an address in the text memory 61; cursor pointer value KP for indicating an address in the character position information memory 63; a provisional cursor pointer value GKP for indicating a provisional target to where the cursor K is to be vertically moved; and a line count value LC representing the number of lines. A display character size memory 65 is provided for storing determined display character size data. A cursor movement target memory 66 is provided for storing information on the displacement amount of the cursor K in order to determine the final target position to where the cursor K will actually be moved in the vertical direction. Portions of the cursor movement target memory 66 are dedicated as a first buffer and a second buffer. The first buffer is for storing displacement amount data 1M (to be described later). The second buffer is for storing displacement amount data 2M (to be described later). A display data buffer 67 is provided for composing and storing display dot pattern data for a plurality of inputted characters. A print data buffer 67 is provided for composing and storing print dot pattern data of a plurality of characters to be printed.

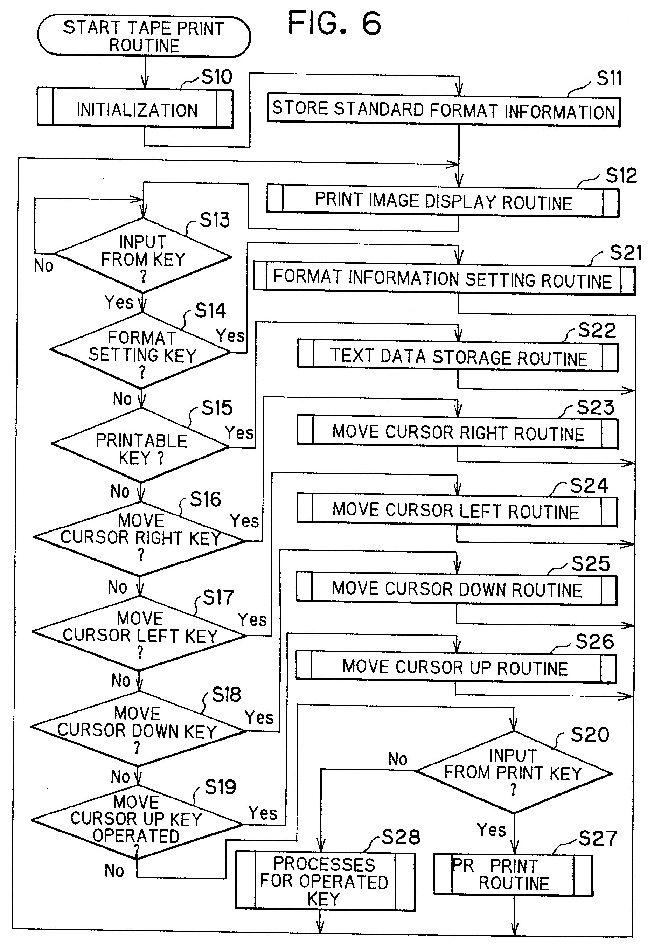

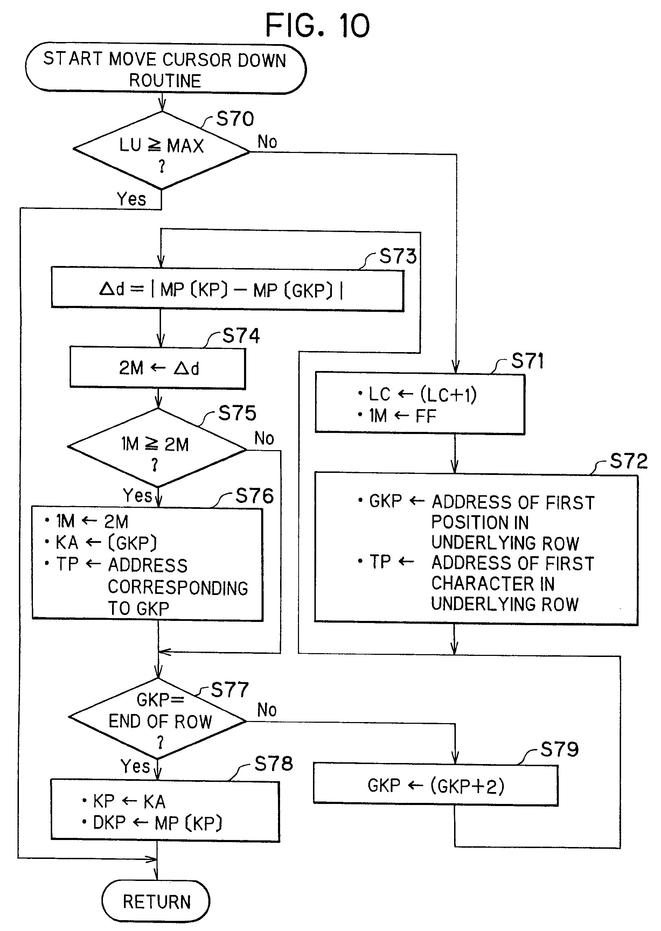

The tape print routine executed by the control unit C of the tape printing apparatus 1 will be described below with reference to the flowcharts in Figs. 6 through 11. In the figures, Si (i = 10, 11, 12, etc.) represents individual steps.

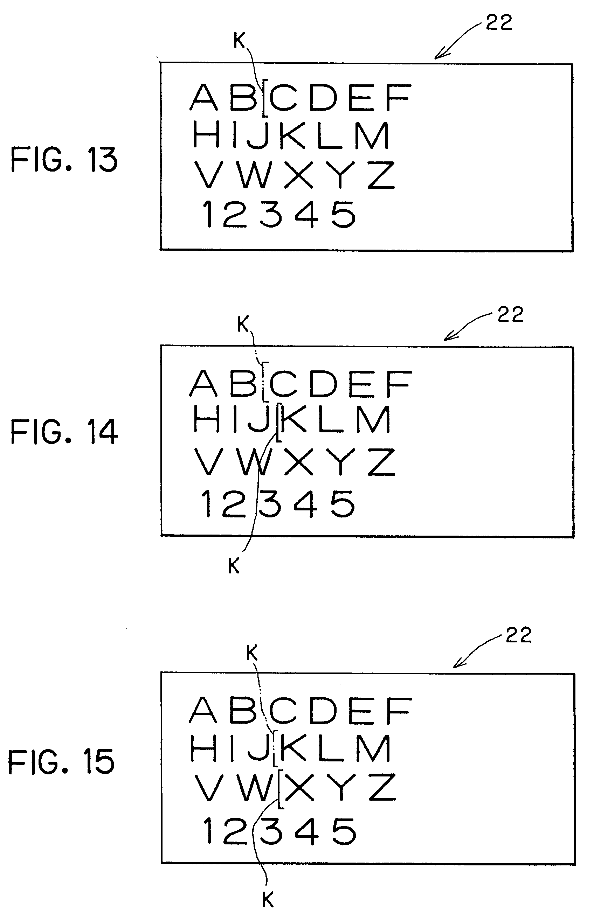

Operating the power key on the keyboard 3 starts the routine. Starting the routine clears the memories 61 through 68 in the RAM 60 and initializes the print mechanism PM (S10). Then, the first two bytes of the text memory 61 are loaded with the standard format information (S11). The LCD unit 22 displays a text input screen. This screen includes an upright linear cursor K having the same length as the display height of the adjacent character (see Fig. 13). The display character size (height and width) corresponds to the print character size defined by the standard format information. In this example, the standard format information stored in the first two bytes of the text memory 61 includes "Gothic font" for the font number data FN, "44 pt (points)" for the print character size SZ, and "No enhancement" for character enhancement.

A print image display routine is then carried out, whereby the characters and symbols held in the text memory 61 are displayed in print-like images (S12). This routine will be discussed later in more detail.

When Some format setting key is operated (i.e., S13 and S14 are YES), then a format information setting routine is carried out in S21. Then, the routine returns to S13 via S12. During the format information setting routine, the LCD unit 22 displays a format setting screen in which all format settings including the character enhancement type, the print character size, and font name may be designated. With the format setting screen displayed, the cursor move keys are operated to set the cursor consecutively at positions on the screen for setting character enhancement type, print character size, font name, and the like. Desired settings are entered by operating appropriate numeric keys at each item to which the cursor is set, after which the enter key is pressed. This causes the format information including the numerically set character enhancement number MD, print character size SZ, and the like to be stored in the text memory 61 as updated format information.

Next, when a printable key, such as a key representing a character, is manipulated (i.e., S13 is YES, S14 is NO, and S15 is YES), a text data storage routine is executed for storing code data of the manipulated printable key in the text memory 61 as text data (S22). Then the program again returns to S13 via S12. During the text data storage routine, processes are executed for maintaining updated pointer values in addition to those for storing code data. For example, the text pointer value TP and the cursor pointer value KP are both incremented by two bytes.

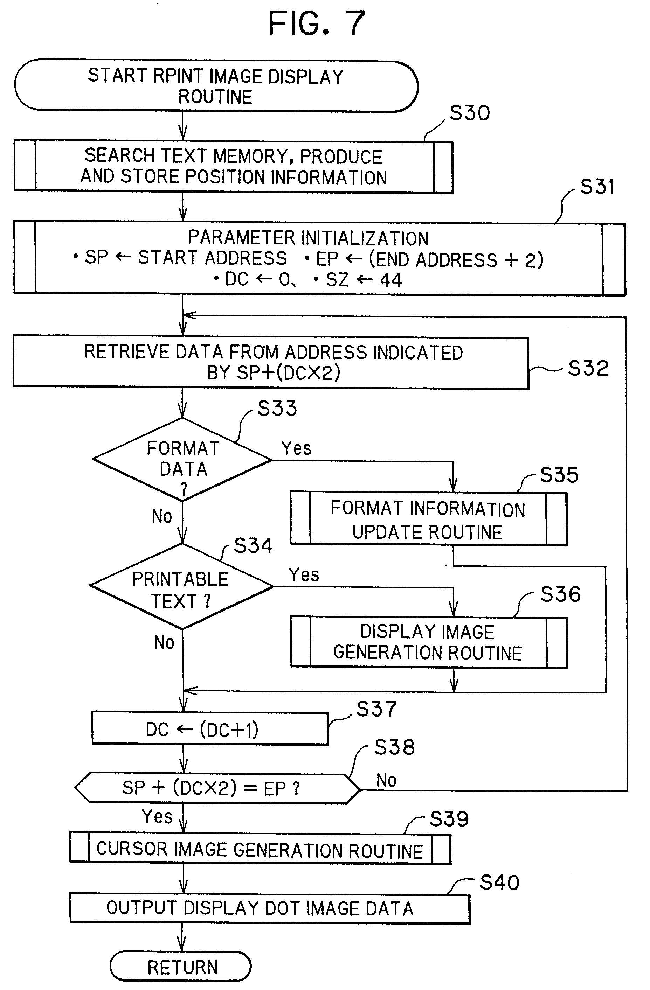

Next, the print image display routine will be described in detail while referring to the flowchart in Fig. 7. When this routine is started, data in the text memory 61 is searched out successively starting from the start address. Information required to develop display dot pattern data in the display data buffer 65, information such as relative positions of characters and positions held by characters, are determined for each character to be displayed based on the format information, character codes, return carriage codes, and the like stored in the text memory. The information is then stored into the character position information memory 63 as character position data MP (S30). Illustratively, the character position data is first determined for printed characters by obtaining the position where each character is to be printed based on character position data, such as format information, character codes, return carriage codes, and print dot pattern data, and by sequentially adding the widths of the characters as they will appear in printed lines. To determine the corresponding character positions for displayed characters, the coordinates of the print character positions are multiplied by one third.

Next, the parameter data in the parameter memory 62 for the print routine is initialised (S31). That is, in the parameter memory 62, the start address of the text memory 61 is set as the start address pointer value SP (see Fig. 12); the address next to the end address of the text memory 61 (end address + 2) is set as the end address pointer value EP (see Fig. 12); the initial value "0" is set for the data count value DC; and the size 44 pt is set for the print character size SZ.

Because format information, character codes, and the like stored in the text memory 61 are each composed of two bytes, search addresses of the format information, character codes, and the like are defined as the start address plus twice the data count value DC. Data identified by the present search address is retrieved from text memory 61 in S32. When the data stored in the start address is format information (i.e., YES in S33), a format information change routine is carried out (S35) wherein format information, such as the print character size SZ and the set tape length, are stored in the parameter memory 62.

Then, the data count value DC is incremented by one (S37). If the resultant search address (i.e., $SP + (DC \times 2)$ ) does not match the address designated by the end address pointer value EP, other characters to be displayed are assumed to remain in the text memory 61 (i.e., NO in S38) so that S32 and subsequent steps are again carried out.

When the search address data is a printable character code (i.e., S33 is NO and S34 is YES), the display image generation routine is executed (S36). When this program is started, the display character size is determined using the print character size SZ and the character size conversion table TB2, and then stored in the display character memory 65. Next, the display dot pattern data for the character code at that display character size is retrieved from the display CGROM 53 and stored in the display data buffer 65 based on the character position data MP stored in the character position information memory 63.

When the search address, produced by adding double the data count value DC to the start address, matches the address designated by the end address pointer value EP (i.e., YES in S38), a cursor image data generation routine (S39) is executed based on the number of return carriage codes and based on the address of the character position data MP (KP), which is the character position data MP indicated by the cursor pointer value KP. This routine is for generating dot pattern data for the cursor K at the location in the display data buffer 67 indicated by the character position data MP (KP). Of the display dot image data developed and stored in the display data buffer 65, dot image data for one full screen, including dot pattern data of the cursor K, is outputted to the video RAM 24 and displayed on the display 33 (S40). Then this routine is terminated and the program returns to S13.

For the following example, it will be assumed that the strings of character codes "ABCDEF," "HIJHLM," "VWXYZ," and "12345," the format information, and the return carriage codes (line returns) shown in Fig. 12 are stored in the text memory 61. Also, it will be assumed that the print tape 19 housed in the tape cassette CS has a tape width of 24 mm and that the print character size SZ is set to four lines of 10 pts (24 dots) based on the printable width data determined using the printable range table TB1, which translates to a display character size of 7 dots. In this situation, the display 22 will appear as shown in Fig. 13. The overall display region is set as the print image display screen according to the 24 mm tape width. The cursor K and the characters are displayed on the display 22 at a 7 dot display character size in four vertically aligned lines.

The text pointer value TP, which indicates an address in the text memory 61, and the cursor pointer value KP, which indicates an address in the character position information memory 63, always have a correspondence relationship. Therefore, when the text pointer value TP indicates the storage address of the character "C" as shown in Fig. 12, the cursor pointer value KP indicates the storage address of the character location of the character "C" and the cursor K indicates the alphabetic character "C" on the display 22 as shown in Fig. 13. That is, the character position MPC of the character "C" has a starting point on the display calculated by adding the character widths of the characters "A" and "B" to the value of the extreme lefthand position on the display. Character positions MPr represent positions of carriage returns (line returns). The character position MP$\alpha$ is the starting point of the next character on the display.

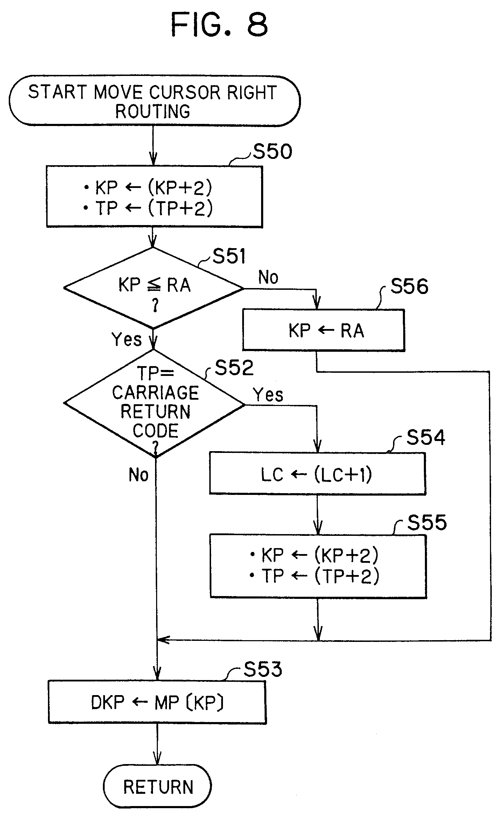

When the move cursor right key is operated during the tape print routine (i.e., S13 is YES, S14 and S15 are NO, and S16 is YES), a move cursor right routine (refer to Fig. 8) is executed (S23). When this routine is started, first the cursor pointer value KP and the text pointer value TP are incremented by two bytes each (S50). Next, when the cursor pointer value KP is equal to or less than the end address RA (refer to Fig. 12), which means that the cursor can be moved rightward (i.e., S51 is YES), and further when a character code other than a carriage return code is stored in the address of the text memory 61 indicated by the text pointer value TP (i.e., S52 is NO), the character position data MP (KP) at the address indicated by the cursor pointer value KP is outputted as the target position data DKP of the cursor K (S53). Then this routine is completed and the program returns to S12 of the tape print routine. In this case, the print image display routine (S12) causes, based on the character position data MP (KP), which is the target position data DKP of the cursor K, the cursor K to move to and to indicate the display character one position to the right of the initial character.

However, when a carriage return code is stored in the address indicated by the text pointer value TP (i.e., S52 is YES), the line count LC is incremented by one (S54). Further, both the cursor pointer value KP and the text pointer value TP are incremented by two bytes (S55). After S53 is performed, this routine is terminated and the program returns to S12. In this case, the print image display routine causes the cursor K to be displayed at the start character position of the underlying line based on the character position data MP (KP), which is the target position data DKP of the cursor K.

When the cursor pointer value KP is larger than the end address RA so that the cursor K can not be moved rightward (i.e., S51 is NO), the cursor pointer value KP is maintained at the end address RA (S56) and the program proceeds to S53. Then this routine is completed and the program returns to S12. In this case, the print image display routine causes the cursor K to be displayed after the last character.

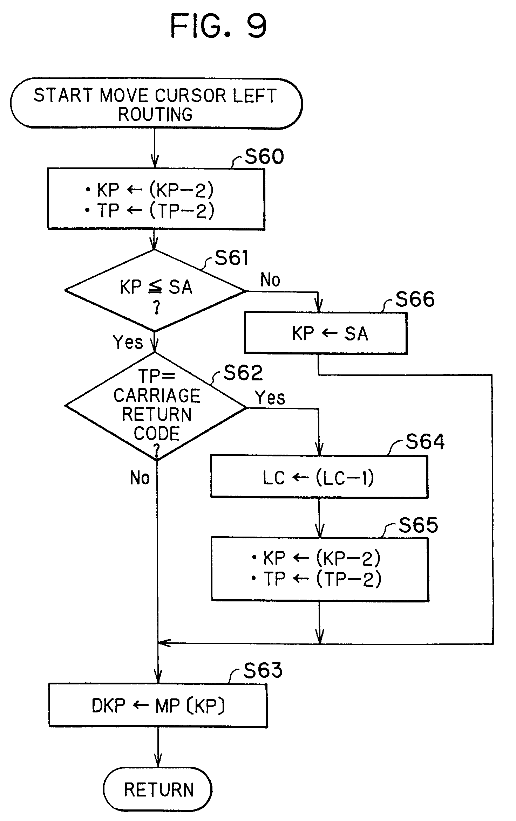

Next, when the move cursor left key is operated (i.e., S13 is YES, S14 through S16 are NO, and S17 is YES), a move cursor left routine (refer to Fig. 9) is executed (S24). When this routine is started, first the cursor pointer value KP and the text pointer value TP are decremented by two bytes each (S60). Next, when the cursor pointer value KP is equal to or greater than the start address SA (refer to Fig. 12), which means that the cursor can be moved leftward (i.e., S61 is YES), and further when a character code other than a carriage return code is stored in the address of the text memory 61 indicated by the text pointer value TP (i.e., S62 is NO), the character position data MP (KP) at the address indicated by the cursor pointer value KP is outputted as the target position data DKP of the cursor K (S63). Then this routine is completed and the program returns to S12 of the tape print routine. In this situation, the print image display routine (S12) causes, based on the character position data MP (KP), which is the target position data DKP of the cursor K, the cursor K to move to and to indicate the display character one character position to the left of the initial character.

However, when a carriage return code is stored in the address indicated by the text pointer value TP (i.e., S62 is YES), the line count LC is decremented by one (S64). Further, both the cursor pointer value KP and the text pointer value TP are decremented by two bytes (S65). After S63 is performed, this routine is terminated and the program returns to S12. In this case, the print image display routine causes the cursor K to be displayed at the end character position of the overlying line (that is the line prior to the present line) based on the character position data MP (KP), which is the target position data DKP of the cursor K.

When the cursor pointer value KP is smaller than the start address SA so that the cursor K can not be moved leftward (i.e., S61 is NO), the cursor pointer value KP is maintained at the start address SA (S66) and the program proceeds to S63. Then this routine is completed and the program returns to S12. In this case, the print image display routine causes the cursor K to be displayed after the last character in the line.

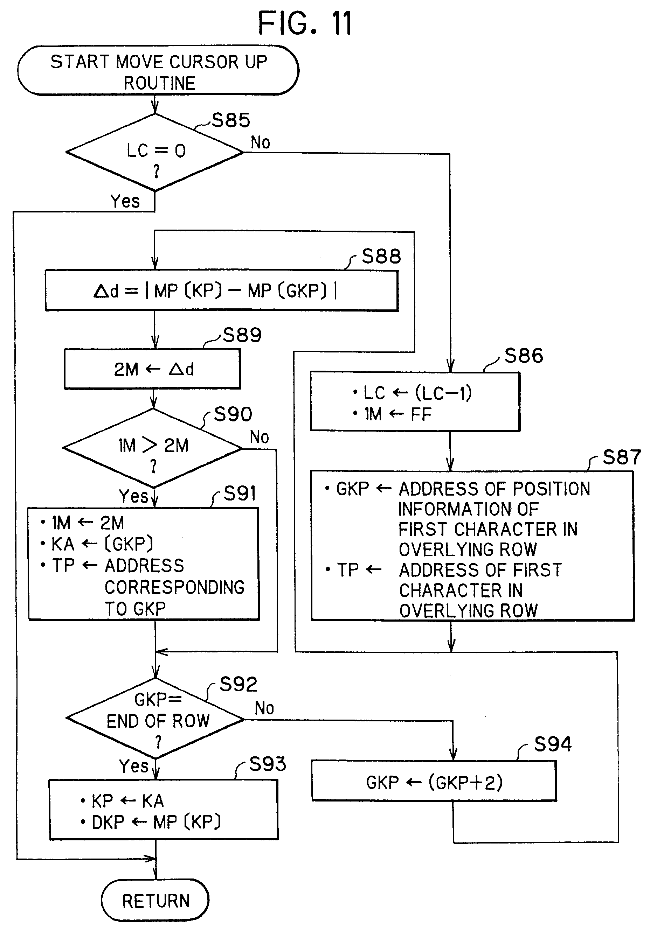

Next, when the move cursor down key is operated (i.e., S13 is YES, S14 through S17 are NO, and S18 is YES), a move cursor down routine (refer to Fig. 11) is executed (S25).

When the line count value LC is smaller than the maximum line count MAX at the start of the move cursor down routine, so that the cursor K can be moved downward (i.e., S70 is NO), the line count value LC is incremented by one. Also, a maximum value FF is stored in the first buffer of the cursor movement target memory 66 as displacement amount data 1M (S71). The maximum value FF can be any value large enough to produce a YES determination in S75 (to be described later) in this routine. For example, the maximum value FF could equal the total widths of characters displayed on the line in question or equal to the total width of the display. Next, the provisional cursor pointer value GKP is set to the address with character position information on the first position in the line that underlies the line indicated by the present cursor pointer value KP. Also, the text pointer value TP is set to the address for the first character of the underlying line (that is, the line directly under the present line) (S72).

The cursor display position displacement amount Δd is then determined (S73). The cursor display position displacement amount Δd is the absolute value of the difference between character position data MP (KP), which is the character position data MP indicated by the cursor pointer value KP, and a character position data MP (GKP), which is the character position data MP indicated by the provisional cursor pointer value GKP. The cursor display position displacement amount Δd is stored in the second buffer of the cursor target memory 66 as displacement amount data 2M (S74). Next, the displacement data 2M and the displacement amount data 1M are compared (S75). When the displacement amount data 1M is greater than or equal to the displacement amount data 2M (i.e., S75 is YES), the displacement amount data 1M in the first buffer is updated to be the value of the displacement data 2M, the address indicated by the provisional cursor pointer value GKP is temporarily stored in the work memory as a cursor address KA, and the address in the text memory 61 that corresponds to the address indicated by the provisional cursor pointer value GKP is set as the text pointer TP (S76). However, when the displacement data 2M is larger than the displacement amount data 1M (i.e., S75 is NO), the program proceeds to S77 without the displacement data 2M being stored in the first buffer as new displacement amount data 1M.

Next, when the provisional cursor pointer value GKP is not the end address (i.e., S77 is NO), the provisional cursor pointer value GKP is incremented by two bytes (S79) and the routine proceeds to S73 whereupon S73 and following steps are repeated. If the provisional cursor pointer value GKP is the end address (i.e., S77 is YES), the minimum displacement amount data 1M, which represents the cursor position in the underlying line that is nearest to the present position of the cursor, is stored in the first buffer and the cursor address KA that corresponds to the minimum displacement amount data 1M is stored in the work memory. Therefore, the cursor address KA (that is, the minimum displacement amount) is stored as the cursor pointer value KP and the character position data MP (KP) of the address indicated by the cursor pointer value KP is stored in the cursor pointer value KP as the target position data DKP of the cursor K (S78). Then this routine is completed and the program returns to S12 of the tape print routine. In the print image display routine, the cursor K is moved based on the character position data MP (KP), which is the target position data DKP of the cursor K, to the position in the underlying line nearest the present position of the cursor K. The cursor is then displayed at that position.

An Illustrative example of the move cursor down routine will be explained below. For this example it will be assumed that the text memory 61 contains data as shown in Fig. 12, As also shown in Fig. 12, the character position information memory 63 contains character position data MP for each character of the character strings stored in the text memory 61. It will be assumed that the text pointer TP indicates the storage address of the character C, so that the cursor pointer value KP indicates the storage address of the C character position MPC. Under these circumstances, the display will appear as shown in Fig. 13, with the cursor displayed on the alphabetic letter C.

When the move cursor down key is operated, the cursor pointer KP1 will indicate the storage address of the K character position MPK, which corresponds to the minimum displacement amount data, and so which is the display position nearest the present position of the cursor (i.e., nearest to the position of character C). The text pointer TP1 will indicate the address of the character K, which corresponds to the cursor pointer KP1. As shown in Fig. 14, this causes the cursor K to move from its present position (that is, from the C character position as indicated by the double chain line in the figure) to the nearest character position in the underlying line, which is the K character position. The cursor K is then displayed at the K character position.

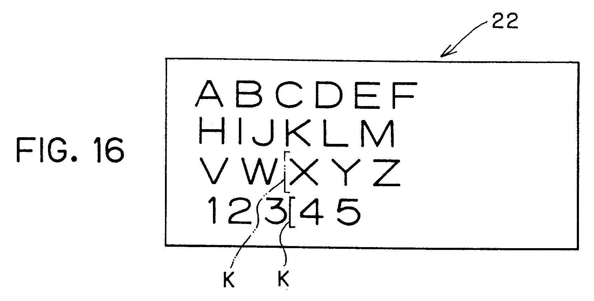

When the move cursor down key is again operated, the cursor pointer KP3 will indicate the storage address of the 4 character position MP4, which corresponds to the minimum displacement amount data and so is the display position nearest the present position of the cursor (i.e., nearest the position of character X). The text pointer 1 will indicate the address of the character 4, because this corresponds to the cursor pointer KP3. As shown in Fig. 16, this causes the cursor K to move from its present position (that is, from the X character position as indicated by the double chain line in the figure) to the nearest character position in the underlying line, which is the 4 character position. The cursor K is then displayed at the 4 character position.

On the other hand, when the move cursor up key is operated (i.e., S13 is YES, S14 through 18 are NO, and S19 is YES), the move cursor up routine (see Fig. 11) is executed (S26).

When the move cursor up routine is started, when the line count value LC is not zero, so that the cursor K can be moved upward (i.e., S85 is NO), the line count value LC is decremented by one and the maximum value FF is stored in the first buffer of the cursor movement target memory 66 as the displacement amount data 1M (S86). Next, the provisional cursor pointer value GKP is set to the address with character information for the start position of the line overlying the line where the cursor pointer value KP is present. Also, the address of the first character in the overlying line is set in the text pointer value TP (S87).

Next, S88 through S92 and S94 are repeated in the same manner as S73 through S77 and S79.

When the provisional cursor pointer value GKP is for the end address (i.e., S92 is YES), the minimum displacement amount data 1M for the character position that is in the overlying line and that is closest to the present cursor position K is stored in the first buffer. Further, the cursor address KA corresponding to the minimum displacement amount data 1M is stored in the work memory. Therefore, in S93, the cursor pointer value KP is changed to the value of the cursor address KA, which is the minimum displacement amount. Also, the target position data DKP is changed to the character position data MP (KP) at the address indicated by the cursor pointer value KP. Then this routine is completed and the program returns to S12. In the print image display routine of S12, based on the character position data MP (KP), which is the target position data DKP of the cursor K, the cursor K is moved to the character position in the display line that is one line above the line with the cursor K and that is closest to the present position of the cursor K. The cursor K is then displayed at that character position.

Next, an illustrative example will be provided for processes performed when the move cursor up key is operated. For this example it will again be assumed that the text memory 61 and the character position information memory 63 contain data as shown in Fig. 12. It will also be assumed that the text pointer TP3 indicates the storage address of the character 4, and that the cursor pointer KP3 indicates the storage address of the character position MP4 of the character 4, so that the cursor K is displayed at the position of the character 4 as shown in Fig. 16.

When the move cursor up key is operated under these conditions, in a manner similar to that described for the move cursor down routine, the text pointer TP2 will move to the storage address of the character X. Also, the cursor pointer KP2 will move to the storage address of the X character position MPX. This causes the cursor K to move from the present cursor position to the closest character position in the overlying line, that is, to the character position X. The cursor is then displayed at the character position X as shown by the solid line in Fig. 15.

When the move cursor up key to further operated, in the same manner, the text pointer TP1 will move to the storage address of the character K. Also, the cursor pointer KP1 will move to the storage address of the K character position MPK. This causes the cursor K to move from the present cursor position (i.e., from the character position X) to the closest character position in the overlying line, that is, to the character position K. The cursor is then displayed at the character position K as shown by the solid line in Fig. 14.

In the tape print routine, when the print key is operated (i.e., S13 is YES, S14 through S19 are NO, and S20 is YES), the print routine is started so that the print dot pattern data in the print data buffer 68 is outputted to the print mechanism PM, whereupon printing is performed on the print tape 19 accordingly (S27). The program then returns to S12. A brief description of the print routine will be provided here. Format information, character codes, and the like are sequentially retrieved from the text memory 61. Based on the print character search table and the print character index table, the print dot pattern data for that character code is retrieved from the print CGROM 54, then developed, composed, and stored in the print data buffer 68. Print dot image data in the print data buffer 68 is outputted to the print mechanism PM and printing is performed on the print tape 19 accordingly.

When a key other than a format setting key, a printable key, the move cursor right, left, down, or up keys, or the print key is manipulated (i.e., S13 is YES and S14 through S20 are NO), processes appropriate for the manipulated key are executed (S28) and the program returns to S12.

When a command for moving the cursor vertically is inputted through a move cursor key, that is, when a move cursor up command is inputted through the move cursor up key or a move cursor down command is inputted through the move cursor down key, the movement target position of the cursor is determined as the position in the vertical direction closest to the present position of the cursor. Then the cursor is displayed at the target position. Therefore, the cursor can be moved to the vertical position that is closest to the present position of the cursor.

Next, a word processor according a second preferred embodiment of the present invention will be provided. The second preferred embodiment is similar to the first preferred embodiment except for operations performed during the routines for moving the cursor left, right, up, and down.

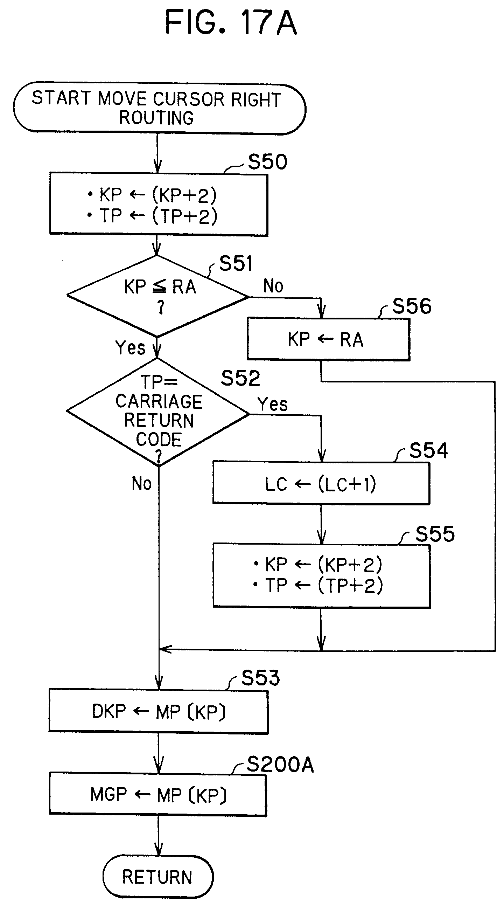

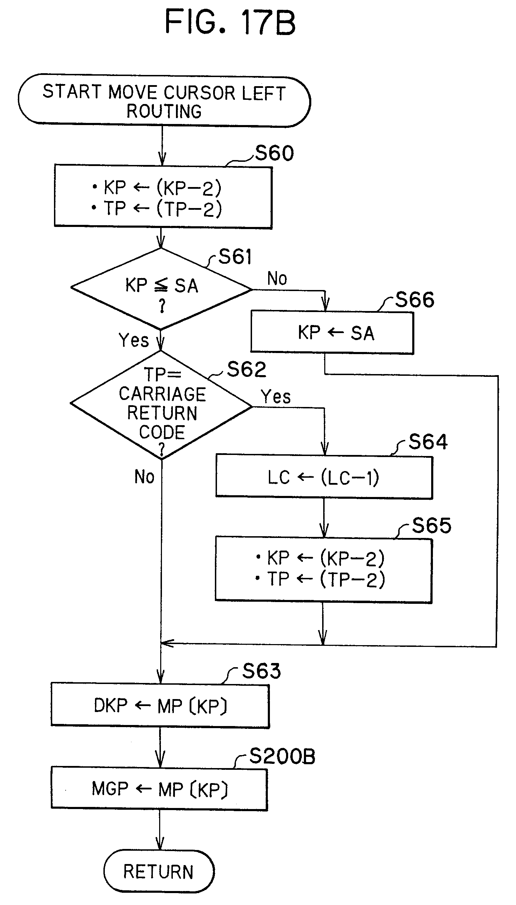

As shown in Figs. 17 A and 17 B, the routines for moving the cursor right and left are substantially the sane as described in the first preferred embodiment, except for the addition of S200A and S200B after S53 and S63 respectively. In S200A and S200B, the character position data MP (KP) is stored in the cursor movement target memory 66 as movement standard position data MGP. The movement standard position data MGP represents an imaginary (i.e., not actually displayed) standard vertical line SVL on the display 22. Vertical movements of the cursor K are performed in relation to the standard vertical line SVL.

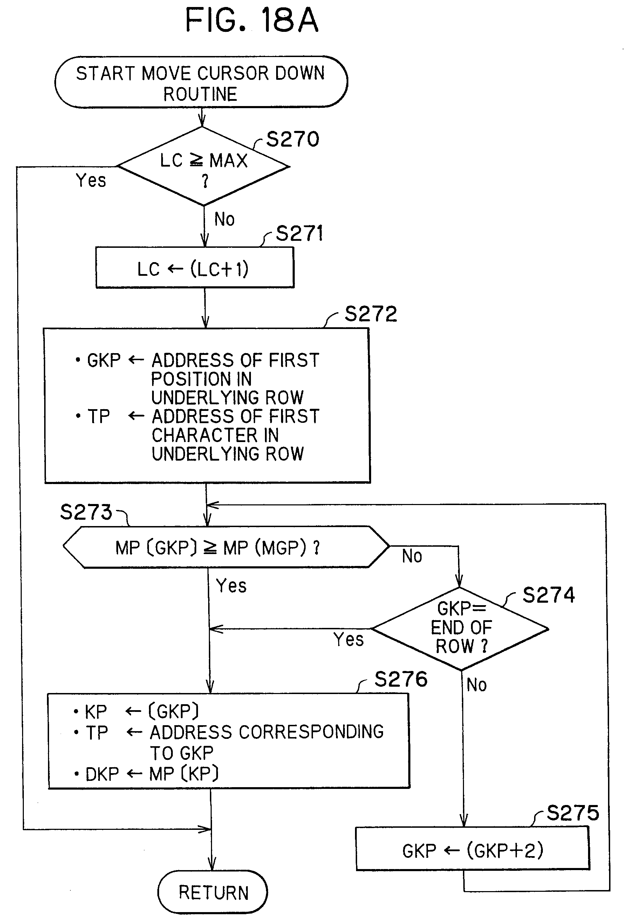

The move cursor down routine according to the second preferred embodiment will be described while referring to the flowchart in Fig. 18 A. As in the first preferred embodiment, when the cursor K can be moved downward at the start of the move cursor down routine, that is, when the line count value LC is smaller than the maximum line count MAX (i.e., S270 is NO), the line count value LC is incremented by one (S271). Next, the address of the character position information of the first character in the line that underlies the line where the cursor pointer value KP exists is set as the provisional cursor pointer value GKP. Also, the address of the first character in the underlying line is set in the text pointer value TP (S272). However, when at the start of this routine the line count value LC is the same as the maximum line count MAX (i.e., S270 is YES), this routine is terminated because the cursor K can not move downward. The program therefore returns to S12 of the tape print routine.

After S272, character position data MP (GKP), which is the character position data MP indicated by the provisional cursor pointer value GKP, is compared with character position data MP (MGP), which is the character position data that corresponds to the movement standard position data MGP. When the character position data MP (GKP) is smaller than the character position data MP (MGP), that is, when the present provisional target of the cursor is to the right of the standard vertical line SVL (i.e., S273 is NO), and when the provisional cursor pointer value GKP does not indicate the address for the end of the line (i.e., S274 is NO), the provisional cursor pointer value GKP is incremented by two bytes (S275) and the program returns to S273, whereupon S273 and subsequent steps are repeated.

When the character position data MP (MGP) is smaller that the MP (GKP), that is, when the provisional target for the cursor K is the cursor position in the underlying line that is nearest to and on the right of the standard vertical line SVL, (i.e., S273 is NO), the address indicated by the provisional cursor pointer value GKP is set as the cursor pointer value KP. Also, character position data MP (KP), which is the character position data MP at the address indicated by the cursor pointer value KP, is stored as the target position data DKP (S276). Then this routine is completed and the program returns to S12. When the character position data MP (GKP) is not equal to or greater than the movement standard position MP (MGP), but the provisional cursor pointer value GKP indicates the line end (i.e., S273 is NO and S274 is YES), then S276 is executed, whereupon in the same manner this routine is completed and the program returns to S12.

In the print image display routine, based on the target position data DKP on the cursor K, which was updated with the character position data MP (KP) in S276, the cursor K is moved to indicate the character in the underlying line that is nearest and in the horizontal direction to the present display position of the cursor K and that is on the right of the standard vertical line SVL.

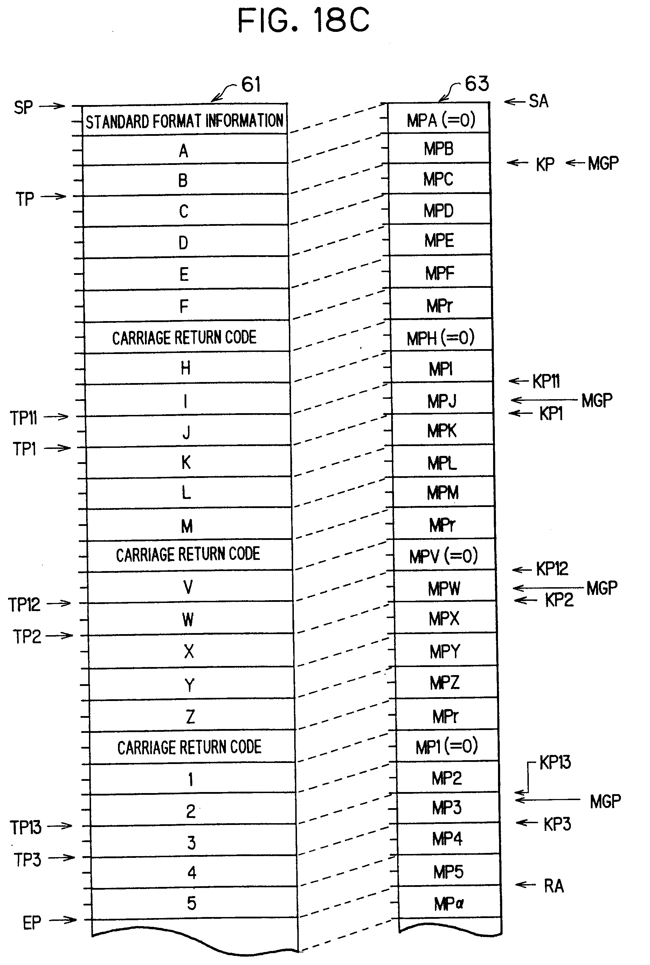

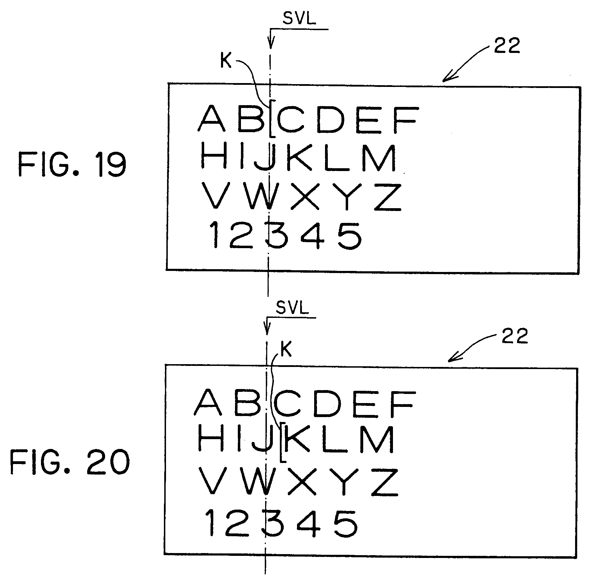

An example will be provided tot the move cursor down operations according to the second preferred embodiment assuming the text memory 61 and the character position information memory 63 contain the data shown in Fig. 18 C. The character C will be indicated by the cursor K as shown in Fig. 19 when the text pointer TP indicates the storage address of the character C and when the cursor pointer value KP indicates the storage address of the C character position data MPC. At this time, the movement standard position data MGP is set to the C character position data MPC indicated by the cursor pointer value KP.

When the move cursor down key is operated, as shown in Fig, 18 C, the cursor pointer KP1 will indicate the storage address of the K character position data MPK because this represents the cursor position in the underlying line that is closest in the horizontal direction to the standard vertical line SVL and that is on the right of the standard vertical line SVL. Also, for the same reasons the text pointer TP1 will indicate the address of the character K, which is in the line indicated by the cursor pointer KP1. Therefore, as shown in Fig. 20, the cursor K is moved to indicate the K character position in the underlying line, because this is the cursor position that is closest in the horizontal direction to the character C and that is to the right of the standard vertical line SVL.

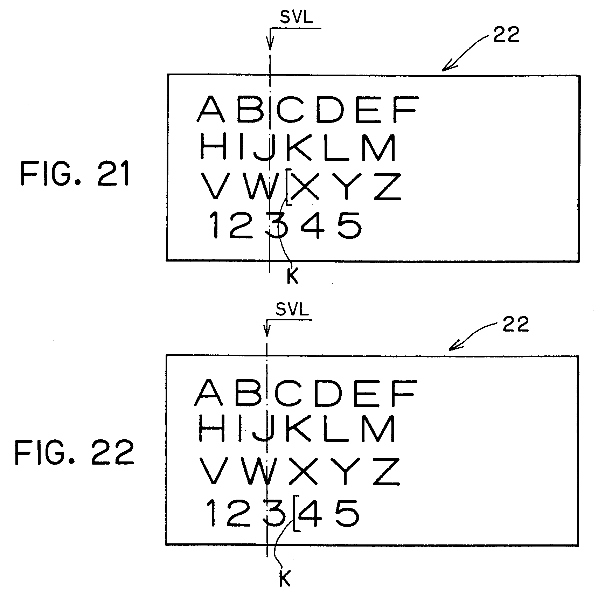

When the move cursor down key is again operated, as shown in Fig. 18 C, the cursor pointer KP2 will indicate the storage address of the X character position data MPK. Also, the text pointer TP2 will indicate the address of the character X, which is in the line indicated by the cursor pointer KP2. Therefore, as shown in Fig. 21, the cursor K is moved to indicate the X character position in the underlying line, because this is the cursor position that is closest in the horizontal direction to the character K and that is to the right of the standard vertical line SVL.

When the move cursor down key is again operated, as shown in Fig. 18 C, the cursor pointer KP3 will indicate the storage address of the 4 character position data MPK in the underlying line. Also, the text pointer TP3 will indicate the address of the character 4 in the line indicated by the cursor pointer KP3. Therefore, as shown in Fig. 22, the cursor K is moved to indicate the position of the character 4 in the underlying line, because this is the cursor position in the underlying line that is closest in the horizontal direction to the character X and that is to the right of the standard vertical line SVL.

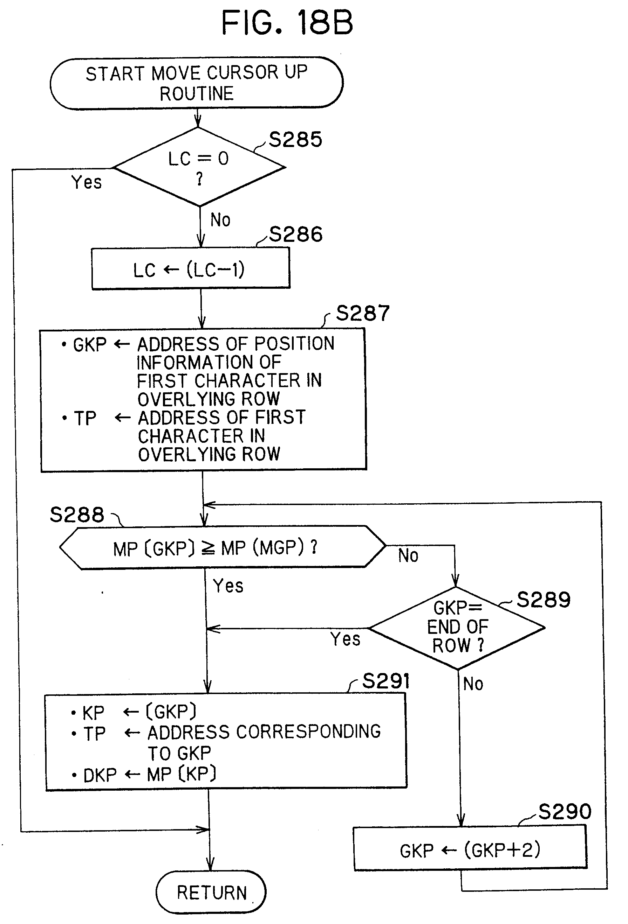

Now, the move cursor up routine will be described while referring to the flowchart in Fig. 18 B. When the cursor K can be moved upward at the start of the move cursor up routine, that is, when the line count value LC is not zero (i.e., S285 is NO), the line count value LC is decremented by one (S286). Next, the address of the character position information on the first character of the overlying line (i.e., the line directly below the line where the cursor pointer value KP exists) is set as the provisional cursor pointer value GKP. Also, the address for the first character of the overlying line is set as the text pointer value TP (S287). However, when the line count value LC is not zero at the start of this routine (i.e., S270 is YES), this routine is terminated because the cursor K can not move upward. The program then returns to S12 of the tape print routine.

After S287, S288 through S291 are repeatedly executed in the same manner as S273 through S276 of the move cursor down routine. Then, this routine is completed and the program returns to S12. In S12 of the print image display routine, based on the character position data MP (KP) of the cursor K, which is the target position data DKP of the cursor K, the cursor K is moved to the cursor position in the overlying line that is closest in the horizontal direction to the present position of the cursor K and that is to the right of the standard vertical line SVL.

An example will be provided for the move cursor up routine. In this example it will again be assumed that the text memory 61 contains the data represented in Fig. 18 C. Also, it will he assumed that the text pointer TP3 indicates the storage address of the character 4, that the cursor pointer value KP3 indicates the storage address of the 4 character position data MP4 of the character 4. Under these circumstances, the character 4 will be indicated by the cursor K as shown in Fig. 22. At this time, the movement standard position data MGP is set to the C character position data MPC, which is indicated by the cursor pointer value KP.

When the move cursor up key is operated, as shown in Fig. 18 C, the cursor pointer KP3 will indicate the storage address of the X character position data MPX in the overlying line. Also, the text pointer TP2 will indicate the address of the character X in the overlying line indicated by the cursor pointer KP2. Therefore, as shown in Fig. 21, the cursor K is moved to indicate the X character position in the overlying line, because this is the cursor position in the overlying line that is closest in the horizontal direction to the character 4 and that is to the right of the standard vertical line SVL.

When the move cursor up key is again operated, as shown in Fig. 18 C, the cursor pointer KP1 will indicate the storage address of the K character position data MPK in the overlying line. Also, the text pointer TP1 will indicate the address of the character K in the overlying line corresponding to the cursor pointer KP1. Therefore, as shown in Fig. 20, the cursor K is moved to indicate the K character position in the overlying line, because this is the cursor position in the overlying line that is closest in the horizontal direction to the character X and that is to the right of the standard vertical line SVL.

When the move cursor up key is again operated, as shown in Fig. 18 C, the cursor pointer KP will indicate the storage address of the C character position data MPC in the overlying line. Also, the text pointer TP will indicate the address of the character C in the overlying line indicated by the cursor pointer KP. Therefore, as shown in Fig. 19, the cursor K is moved to indicate the C character position in the overlying line, because this is the cursor position in the overlying line that is closest in the horizontal direction to the character K and that is to the right of the standard vertical line SVL.

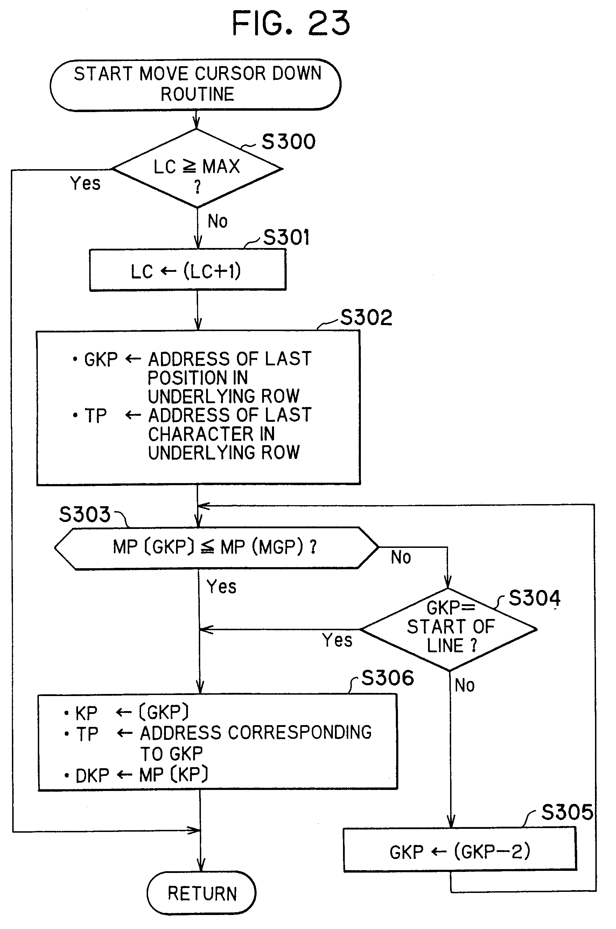

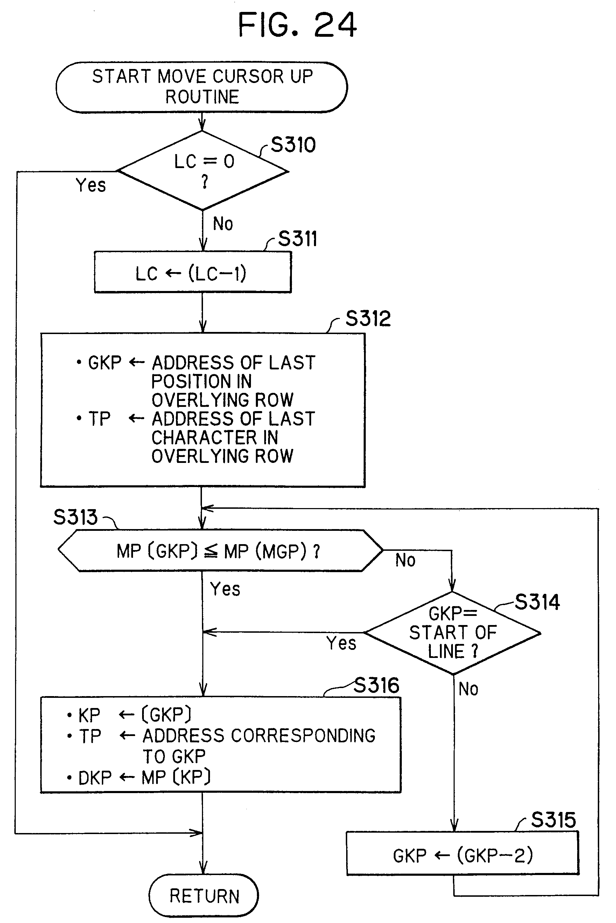

Next, a word processor according a third preferred embodiment of the present invention will be provided. The third preferred embodiment is similar to the second preferred embodiment except that, whereas in the second preferred embodiment the cursor K is moved to positions to the right of the standard vertical line SVL, in the third preferred embodiment the cursor K is moved to positions to the left of the standard vertical line SVL. This is performed by modifying the move cursor up routine and the move cursor down routine as represented by the flowcharts shown in Figs. 23 and 24 respectively.

The move cursor down routine is started when the move cursor down key is operated. In this routine, S300 and S301 are the same as S270 and S271 respectively in the second preferred embodiment so their explanation will be omitted here. After S300 and S301, the address of the character position information of the last position in the line that underlies the line where the cursor pointer value KP exists is set as the provisional cursor pointer value GKP. Also, the address of the last character in the underlying line is set in the text pointer value TP (S302).

After S302, when the character position data MP (GKP) at the address indicated by the provisional cursor pointer value GKP is smaller than the character position data MP (MGP), that is, when the provisional target of the cursor is to the right of the standard vertical line SVL (i.e., S303 is NO), and when the provisional cursor pointer value GKP does not indicate the address for the end of the line (i.e., S304 is NO), the provisional cursor pointer value GKP is decremented by two bytes (S275). When the character position data MP (GKP) indicated by the provisional cursor pointer value GKP is legs than or equal to the character position data MP (MGP), that is, when the provisional target of the cursor K is the cursor position nearest to and on the right side of the standard vertical line SVL (i.e., S303 is YES), S306 is executed.

An example will be provided for the move cursor down routine according to the third preferred embodiment. In this example it will again be assumed that the text memory 61 contains the data represented in Fig. 18 C. Also, it will be assumed that, as shown in Fig. 18 C, the text pointer TP indicates the storage address of the character C and that the cursor pointer value KP indicates the storage address of the C character position data MPC of the character C.

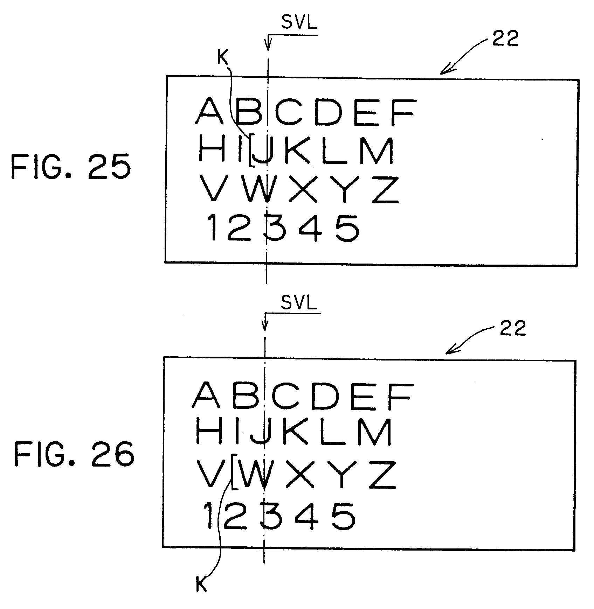

When the move cursor down key is operated, the cursor pointer KP11 will indicate the storage address of the J character position data MPJ in the underlying line because this represents the cursor position in the underlying line that is closest in the horizontal direction to the standard vertical line SVL and that is to the left of the standard vertical line SVL. For the same reasons, the text pointer TP11 will indicate the character J in the underlying line. Therefore, the cursor K will move to indicate the character J in the underlying line as shown in Fig. 25 because this is the cursor position that is closest in the horizontal direction to the character C and that is to the left of the standard vertical line SVL.

When the move cursor down key is again operated the cursor pointer KP12 will indicate the storage address of the W character position data MPW in the underlying line. Also, the text pointer TP12 will indicate the character W in the underlying line. Therefore the cursor K will move indicate the character W in the underlying line as shown in Fig. 26.

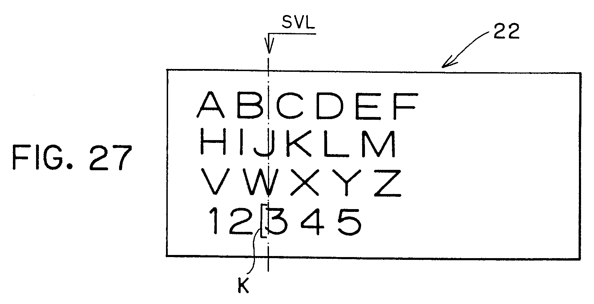

When the move cursor down key is again operated the cursor pointer KP13 will indicate the storage address of the 3 character position data MP3 in the underlying line. Also, the text pointer TP13 will indicate the character 3 in the underlying line. Therefore the cursor K will move to indicate the character 3 in the underlying line as shown in Fig. 27.

Next an explanation will be provided for the move cursor up routine according to the third preferred embodiment. The move cursor up routine shown in Fig. 24 is started when the move cursor up key is operated. In this routine, S310 and S311 are the same as S285 and S286 in the second preferred embodiment so their explanation will be omitted here. Subsequent steps S312, S313, S314, S315, and S316 of the move cursor according to the third preferred embodiment are the same as S301, S303, S304, S305, and S306 of the move cursor down routine according to the third preferred embodiment, so their explanation will be omitted here.

An example will be provided for the move cursor up routine according to the third preferred embodiment. In this example it will again be assumed that the text memory 61 contains the data represented in Fig. 18 C. Also, it will be assumed that, as shown in Fig. 18 C, the text pointer TP13 indicates the storage address of the character 3 and that the cursor pointer value KP13 indicates the storage address of the 3 character position data MP3 of the character C.

When the move cursor up key is operated, the cursor pointer KP12 will indicate the storage address of the W character position data MPW in the overlying line because this represents the cursor position in the overlying line that is closest in the horizontal direction to the standard vertical line SVL and that is to the left of the standard vertical line SVL. Also, the text pointer TP12 will indicate the character W in the overlying line. Therefore the cursor K will move to indicate the character W in the overlying line as shown in Fig. 26.

When the move cursor up key is again operated the cursor pointer KP11 will indicate the storage address of the J character position data MPJ in the overlying line. Also, the text pointer TP11 will indicate the character J in the overlying line. Therefore the cursor K will move indicate the character J in the overlying line as shown in Fig. 25.

While the invention has been described in detail with reference to specific embodiments thereof, it would be apparent to those skilled in the art that various changes and modifications may be made therein without departing the invention, the scope of which is defined by the attached claims.

For example, instead of a plurality of print dot pattern fonts, standard outline can be stored in the print CGROM 54 in correspondence with the character codes of each of the plurality of characters. The cursor K can be any of a variety of shapes, such as a rectangular shape that covers the current position or a horizontal line that underlines the current position. Also, the present invention can be applied to various types of word processors which include a keyboard and a display. Further, a function can be provided which allows selection of whether target positions for the cursor are to the left or to the right of the movement standard position data MGP.

## Claims

1.  A word processor for producing text containing a plurality of characters that are aligned in a horizontal direction in lines on a display (22), the word processor comprising:

    input means (3) for inputting characters of the plurality of characters and for inputting a variety of commands including cursor movement commands for moving a cursor (K) across the display (22) in a vertical direction which is perpendicular to the horizontal direction;
    data memory means (61) for storing inputted character data that represents inputted characters that are inputted via the input means (3);
    display means (22) including the display (22) which is capable of displaying the cursor (K) and characters in a plurality of lines;
    display font memory means (53) for storing display dot pattern data for each of the plurality of characters;
    display data production means for retrieving from the display font memory means (53) display dot pattern data for the inputted character data stored in the data memory means (61) and for composing display dot image data, which includes character width data indicating the width of characters in the horizontal direction, in order to display the inputted characters on the display means (22) in an image that appears identical to when the inputted characters are printed out;

display control means (23) for receiving the display dot image data composed in the display data production means and for controlling the display means (22) to display the display dot image data;

cursor position memory means for setting and storing, each time a character and each time a command is inputted through the input means (3), present cursor position data on a present cursor position where the cursor (K) is presently displayed on the display means (22);

character position memory means (63) for receiving display dot image data composed in the display data production means, for calculating and storing, each time a character and each time a command is inputted through the input means (3), display character position data (MP) representing positions on the display (22) of each of the inputted characters in each line based on the character width data included in the display dot image data; and

cursor target position calculation means for calculating, based on data from the cursor position memory means on the present cursor position and based on data from the character psition memory means (63) on display character positions, target cursor position data each time the cursor movement command is inputted through the input means (3) and for outputting the target cursor position data to the display control means (23).

2.  A word processor as claimed in claim 1 wherein the target cursor position data represents on the display (22) a cursor position that is in a line (SVL) adjacent to and in the vertical direction from a line containing the present cursor position and that is nearest the present cursor position.

3.  A word processor as claimed in claim 1 or 2 wherein the cursor movement command include move cursor up commands and move cursor down commands.

4.  A word processor as claimed in one of claims 1 to 3 wherein the cursor target position calculation means calculates the target cursor position data by calculating displacement amounts between the present cursor position data on the present cursor position and character position data for each display character position that is in the line adjacent to, and that is in the vertical direction from, the line containing the present cursor position, by determining absolute value of each displacement amount, and by setting the target cursor position data to the display character position that corresponds to the minimum absolute value.

5.  A word processor as claimed in one of claims 1 to 4 further comprising standard position memory means for, each time a character and each time a command is inputted through the input means (3), retrieving the present cursor position data from the cursor position memory means and for producing from the present cursor position data standard data that represents on the display (22) a standard line on which a movement of the cursor in the vertical direction is based.

6.  A word processor as claimed in claim 5 wherein the standard position memory means reads the present cursor position data from the cursor position memory means each time a move cursor left command and each time a move cursor right command is inputted through the input means, and sets the present cursor position data as updated standard data.

7.  A word processor as claimed in one of claims 1 to 6 wherein the target cursor position data represents on the display (22) a cursor position (KP) that is in a line adjacent to and in the vertical direction from a line (SVL) containing the present cursor position, that is nearest the present cursor position, and that is in a predetermined horizontal direction relevant to the standard line.

8.  A word processor as claimed in claim 7 wherein the predetermined horizontal direction is leftward from the standard line.

9.  A word processor as claimed in claim 7 wherein the predetermined horizontal direction is rightward from the standard line.

**Patentansprüche**

1.  Textverarbeitungsgerät zum Erzeugen von Text, der eine Mehrzahl von Zeichen enthält, die in einer horizontalen Richtung in Zeilen auf einer Anzeige (22) ausgerichtet sind, wobei das Textverarbeitungsgerät aufweist:

    ein Eingabemittel (3) zum Eingeben von Zeichen der Mehrzahl von Zeichen und zum Eingeben einer Verschiedenheit von Befehlen einschließlich von Cursorbewegungsbefehlen zum Bewegen eines Cursors (K) über die Anzeige (22) in einer vertikalen Richtung, die senkrecht zu der horizontalen Richtung ist;

ein Datenspeichermittel (61) zum Speichern eingegebener Zeichendaten, die eingegebene Zeichen darstellen, die durch das Eingabemittel (3) eingegeben sind;

ein Anzeigemittel (22), das die Anzeige (22) enthält, die den Cursor (K) und Zeichen in einer Mehrzahl von Zeilen anzeigen kann;

ein Anzeigentypenspeichermittel (53) zum Speichern von Anzeigenpunktmusterdaten für jedes der Mehrzahl von Zeichen;

ein Anzeigendatenerzeugungsmittel zum Gewinnen von Anzeigenpunktmusterdaten aus dem Anzeigentypenspeichermittel (53) für die in dem Datenspeichermittel (61) gespeicherten eingegebenen Zeichendaten und zum Zusammensetzen von Anzeigenpunktbilddaten, die Zeichenbreitendaten enthalten, die die Breite von Zeichen in der horizontalen Richtung bezeichnen, zum Anzeigen der eingegebenen Zeichen auf dem Anzeigemittel (22) in einem Bild, das identisch dazu erscheint, wenn die eingegebenen Zeichen ausgedruckt werden;

ein Anzeigensteuermittel (23) zum Empfangen der Anzeigenpunktbilddaten, die in dem Anzeigendatenerzeugungsmittel zusammengesetzt sind, und zum Steuern des Anzeigemittels (22) zum Anzeigen der Anzeigenpunktbilddaten;

ein Cursorpositionsspeichermittel zum Einstellen und Speichern, jedesmal wenn ein Zeichen und jedesmal wenn ein Befehl durch das Eingabemittel (3) eingegeben wird, der gegenwärtigen Cursorpositionsdaten über eine gegenwärtige Cursorposition, an der der Cursor (K) gegenwärtig auf dem Anzeigemittel (22) angezeigt wird;

ein Zeichenpositionsspeichermittel (63) zum Empfangen der in dem Anzeigendatenerzeugungsmittel zusammengesetzten Anzeigenpunktbilddaten, zum Berechnen und Speichern, jedesmal wenn ein Zeichen und jedesmal wenn ein Befehl durch das Eingabemittel (3) eingegeben wird, von Anzeigenzeichenpositionsdaten (MP), die Positionen auf der Anzeige (22) von jedem der eingegebenen Zeichen in jeder Zeile darstellen, auf der Grundlage der in den Anzeigenpunktbilddaten enthaltenen Zeichenbreitendaten; und

ein Cursorzielpositionsberechnungsmittel zum Berechnen auf der Grundlage von Daten aus dem Cursorpositionsspeichermittel über die gegenwärtige Cursorposition und auf der Grundlage von Daten aus dem Zeichenpositionsspeichermittel (63) über Anzeigenzeichenpositionen von Zielcursorpositionsdaten, jedesmal wenn der Cursorbewegungsbefehl durch das Eingabemittel (3) eingegeben wird, und zum Ausgeben der Zielcursorpositionsdaten an das Anzeigensteuermittel (23).

2. Textverarbeitungsgerät nach Anspruch 1, bei dem die Zielcursorpositionsdaten auf der Anzeige (22) eine Cursorposition darstellen, die in einer Linie (SVL) ist, die benachbart zu und in der vertikalen Richtung von einer Linie, die die gegenwärtige Cursorposition enthält und die nächste zu der gegenwärtigen Cursorposition ist, ist.

3. Textverarbeitungsgerät nach Anspruch 1 oder 2, bei dem der Befehl der Cursorbewegung Befehle der Cursoraufwärtsbewegung und Befehle der Cursorabwärtsbewegung enthält.

4. Textverarbeitungsgerät nach einem der Ansprüche 1 bis 3, bei dem das Cursorzielpositionsberechnungsmittel die Zielcursorpositionsdaten berechnet durch Berechnen von Verschiebungsbeträgen zwischen den gegenwärtigen Cursorpositionsdaten über die gegenwärtige Cursorposition und Zeichenpositionsdaten für jede Anzeigenzeichenposition, die in der Linie ist, die benachbart und in der vertikalen Richtung von der Linie, die die gegenwärtige Cursorposition enthält, ist, in dem der Absolutwert eines jeden Verschiebungsbetrages bestimmt wird und in dem die Zielcursorpositionsdaten auf die Anzeigenzeichenposition gesetzt werden, die dem minimalen Absolutwert entspricht.

5. Textverarbeitungsgerät nach einem der Ansprüche 1 bis 4, weiter mit einem Standardpositionsspeichermittel zum Gewinnen der gegenwärtigen Cursorpositionsdaten aus dem Cursorpositionsspeichermittel und zum Erzeugen aus den gegenwärtigen Cursorpositionsdaten von Standarddaten, die auf der Anzeige (22) eine Standardlinie darstellen, auf der eine Bewegung des Cursors in der vertikalen Richtung basiert, jedesmal wenn ein Zeichen und jedesmal wenn ein Befehl durch das Eingabemittel (3) eingegeben wird.

6. Textverarbeitungsgerät nach Anspruch 5, bei dem das Standardpositionsspeichermittel die gegenwärtigen Cursorpositionsdaten aus dem Cursorpositionsspeichermittel liest, jedesmal wenn ein Befehl der Cursorlinksbewegung und jedesmal wenn ein Befehle der Cursorrechtsbewegung durch das Eingabemittel eingegeben wird, und die gegenwärtigen Cursorpositionsdaten als aktualisierte Standarddaten setzt.

7. Textverarbeitungsgerät nach einem der Ansprüche 1 bis 6, bei dem die Zielcursorpositionsdaten auf der Anzeige (22) eine Cursorposition (KP) darstellen, die in einer Linie ist, die benachbart und in der vertikalen Richtung von einer Linie (SVL) ist, die die gegenwärtige Cursorposition enthält, die am nächsten zu der gegenwärtigen Cursorposition ist und die in einer vorbestimmten horizontalen Richtung relevant zu der Standardlinie ist.

**8.** Textverarbeitungsgerät nach Anspruch 7, bei dem die vorbestimmte horizontale Richtung links von der Standardlinie ist.

**9.** Textverarbeitungsgerät nach Anspruch 7, bei dem die vorbestimmte horizontale Richtung rechts von der Standardlinie ist.

**Revendications**

**1.** Appareil de traitement de texte servant à produire un texte contenant une pluralité de caractères qui sont alignés dans une direction horizontale sur les lignes d'un dispositif d'affichage (22), l'appareil de traitement de texte comprenant :

des moyens d'introduction (3) servant à introduire des caractères choisis parmi une pluralité de caractères et à introduire une variété de commandes comprenant des commandes de déplacement de curseur pour déplacer un curseur (K) sur le dispositif d'affichage (22) dans une direction verticale qui est perpendiculaire à la direction horizontale ;

des moyens de mémorisation de données (61) servant à mémoriser des données de caractères introduits qui représentent des caractères introduits, qui sont introduits par l'intermédiaire des moyens d'introduction (3) ;

des moyens d'affichage (22) comprenant le dispositif d'affichage (22), qui est capable d'afficher le curseur (K) et des caractères sur une pluralité de lignes ;

des moyens de mémorisation de la police affichable (53) servant à mémoriser des données de motifs de points affichables concernant chacun des différents caractères ;

des moyens de production de données d'affichage servant à récupérer dans les moyens de mémorisation de police affichable (53) des données de motifs de points affichables concernant les données de caractères introduits mémorisées dans les moyens de mémorisation de données (61) et à composer des données d'images par points affichables, qui comprennent des données de largeur de caractère indiquant la largeur des caractères dans la direction horizontale, afin d'afficher les caractères introduits sur les moyens d'affichage (22) sous la forme d'une image qui apparaît de manière identique à celle qui est produite lorsque les caractères introduits sont imprimés ;

des moyens de commande d'affichage (23) destinés à recevoir les données d'images par points affichables composées dans les moyens de production de données d'affichage et à commander les moyens d'affichage (22) pour qu'ils affichent les données d'images par points affichables ;

des moyens de mémorisation de la position du curseur servant à régler et mémoriser, à chaque fois qu'un caractère et à chaque fois qu'une commande sont introduits par l'intermédiaire des moyens d'introduction (3), les données de position actuelle du curseur concernant une position actuelle de curseur à laquelle le curseur (K) est actuellement affiché sur les moyens d'affichage (22) ;

des moyens de mémorisation de la position des caractères (63) servant à recevoir des données d'images de points affichables composées dans les moyens de production de données d'affichage, pour calculer et mémoriser, à chaque fois qu'un caractère et à chaque fois qu'une commande sont introduits par l'intermédiaire des moyens d'introduction (3), les données de position de caractère affichable (MP) représentant, sur les moyens d'affichage (22), les positions de chacun des caractères introduits sur chaque ligne, en fonction des données de largeur de caractère incluses dans les données d'images de points affichables ; et

des moyens de calcul de la position cible du curseur servant à calculer, en fonction de données provenant des moyens de mémorisation de la position du curseur, concernant la position actuelle du curseur, et en fonction de données provenant des moyens de mémorisation de la position des caractères (63), concernant les positions des caractères affichables, les données de position cible du curseur à chaque fois qu'une commande de déplacement du curseur est introduite par l'intermédiaire des moyens d'introduction (3), et à envoyer les données de position cible du curseur aux moyens de commande d'affichage (23).

**2.** Appareil de traitement de texte selon la revendication 1, dans lequel les données de position cible du curseur représentent, sur les moyens d'affichage (22), une position du curseur qui se trouve sur une ligne (SVL) contiguë à une ligne contenant la position actuelle du curseur, dans la direction verticale par rapport à celle-ci, et qui est la plus proche de la position actuelle du curseur.

**3.** Appareil de traitement de texte selon la revendication 1 ou 2, dans lequel la commande de déplacement de curseur comprend des commandes de déplacement de curseur vers le haut et des commandes de déplacement de curseur vers le bas.

4.	Appareil de traitement de texte selon l'une des revendications 1 à 3, dans lequel les moyens de calcul de la position cible du curseur calculent les données de position cible du curseur en calculant des quantités de déplacement entre les données de position actuelle du curseur concernant la position actuelle du curseur et des données de position de caractère concernant chaque position de caractère affichable qui se trouve sur la ligne contiguë à la ligne contenant la position actuelle du curseur, et qui est dans la direction verticale par rapport à celle-ci, en déterminant la valeur absolue de chaque quantité de déplacement, et en réglant les données de position cible du curseur à la position de caractère affichable qui correspond à la valeur absolue minimale.

5.	Appareil de traitement de texte selon l'une des revendications 1 à 4, comprenant en outre des moyens de mémorisation de position normale servant à récupérer, à chaque fois qu'un caractère et à chaque fois qu'une commande sont introduits par l'intermédiaire des moyens d'introduction (3), les données de position actuelle du curseur dans les moyens de mémorisation de la position du curseur et à produire à partir des données de position actuelle du curseur des données normales qui représentent, sur les moyens d'affichage (22), une ligne normale sur laquelle se fonde un déplacement du curseur dans la direction verticale.

6.	Appareil de traitement de texte selon la revendication 5, dans lequel les moyens de mémorisation de position normale lisent les données de position actuelle du curseur dans les moyens de mémorisation de la position du curseur, à chaque fois qu'une commande déplacement du curseur vers la gauche et à chaque fois qu'une commande de déplacement du curseur vers la droite sont introduites par l'intermédiaire des moyens d'introduction, et règlent les données de position actuelle du curseur aux données normales mises à jour.

7.	Appareil de traitement de texte selon l'une des revendications 1 à 6, dans lequel les données de position cible du curseur représentent, sur les moyens d'affichage (22), une position du curseur (KP) qui se trouve sur une ligne contiguë à une ligne (SVL) contenant la position actuelle du curseur, dans la direction verticale par rapport à celleci, qui est le plus proche de la position actuelle du curseur et qui se trouve dans une direction horizontale prédéterminée par rapport à la ligne normale.

8.	Appareil de traitement de texte selon la revendication 7, dans lequel la direction horizontale prédéterminée est la gauche par rapport à la ligne normale.

9.	Appareil de traitement de texte selon la revendication 7, dans lequel la direction horizontale prédéterminée est la droite par rapport à la ligne normale.

# FIG.1

# FIG.2A

# FIG. 2B

# FIG. 3

KEYBOARD — 3

CASSETTE SENSOR — 42

LCD — 22

LCDC — 23
VIDEO RAM — 24

ALARM BUZZER — 43
DRIVING CIRCUIT — 44

THERMAL HEAD — 15
DRIVING CIRCUIT — 47

TAPE FEED MOTOR — 45
DRIVING CIRCUIT — 48

CUTTING MOTOR — 46
DRIVING CIRCUIT — 49

I/C INTERFACE — 50

CPU — 52

DISPLAY CG ROM — 53

PRINT CG ROM — 54

ROM — 55

51

RAM — 60
61
62
63
64
65
66
67
68

PM

C

EP 0 660 248 B1

# FIG. 4

TB1

| TAPE WIDTH (mm) | PRINTABLE WIDTH (dots) |
|---|---|
| 6 | 32 |
| 9 | 48 |
| 12 | 56 |
| 18 | 96 |
| 24 | 96 |

# FIG. 5A

TB2

| PRINT CHARACTER SIZE (pt) | DISPLAY CHARACTER SIZE (dots) |
|---|---|
| 6 | 7 |
| 10 | 7 |
| 13 | 10 |
| 19 | 16 |
| 26 | 21 |
| 38 | 32 |
| 44 (BIG) | 32 (BIG) |

# FIG. 5B

TB3

| PRINT CHARACTER SIZE(pt) | CHAR-ACTER CODE | START ADDRESS OF PRINT DOT PATTERN DATA | PULL—WIDTH DATA(WD) |
|---|---|---|---|
| 6 (16 DOTS) | A | SA6A | WD6A |
| | B | SA6B | WD6B |
| | C | SA6C | WD6C |
| | D | SA6D | WD6D |

| PRINT CHARACTER SIZE(pt) | CHAR-ACTER CODE | START ADDRESS OF PRINT DOT PATTERN DATA | PULL—WIDTH DATA(WD) |
|---|---|---|---|
| 10 (14 DOTS) | A | SA10A | WD10A |
| | B | SA10B | WD10B |
| | C | SA10C | WD10C |
| | D | SA10D | WD10D |

| PRINT CHARACTER SIZE(pt) | CHAR-ACTER CODE | START ADDRESS OF PRINT DOT PATTERN DATA | PULL—WIDTH DATA(WD) |
|---|---|---|---|
| 13 (32 DOTS) | A | SA13A | WD13A |
| | B | SA13B | WD13B |
| | C | SA13C | WD13C |
| | D | SA13D | WD13D |

| PRINT CHARACTER SIZE(pt) | CHAR-ACTER CODE | START ADDRESS OF PRINT DOT PATTERN DATA | PULL—WIDTH DATA(WD) |
|---|---|---|---|
| 19 (48 DOTS) | A | SA19A | WD19A |
| | B | SA19B | WD19B |
| | C | SA19C | WD19C |
| | D | SA19D | WD19D |

# FIG. 6

START TAPE PRINT ROUTINE

INITIALIZATION — S10

STORE STANDARD FORMAT INFORMATION — S11

PRINT IMAGE DISPLAY ROUTINE — S12

S13 — INPUT FROM KEY ? — No / Yes

S14 — FORMAT SETTING KEY ? — Yes — No

FORMAT INFORMATION SETTING ROUTINE — S21

TEXT DATA STORAGE ROUTINE — S22

S15 — PRINTABLE KEY ? — Yes — No

MOVE CURSOR RIGHT ROUTINE — S23

S16 — MOVE CURSOR RIGHT KEY ? — Yes — No

MOVE CURSOR LEFT ROUTINE — S24

S17 — MOVE CURSOR LEFT KEY ? — Yes — No

MOVE CURSOR DOWN ROUTINE — S25

S18 — MOVE CURSOR DOWN KEY ? — Yes — No

MOVE CURSOR UP ROUTINE — S26

S19 — MOVE CURSOR UP KEY OPERATED ? — Yes — No

S20 — INPUT FROM PRINT KEY ? — No / Yes

PROCESSES FOR OPERATED KEY — S28

PR PRINT ROUTINE — S27

# FIG. 7

START RPINT IMAGE DISPLAY
ROUTINE

**S30**
SEARCH TEXT MEMORY, PRODUCE
AND STORE POSITION INFORMATION

**S31**
PARAMETER INITIALIZATION
· SP ← START ADDRESS   · EP ← (END ADDRESS + 2)
· DC ← 0、  · SZ ← 44

**S32**
RETRIEVE DATA FROM ADDRESS INDICATED
BY SP+(DC×2)

**S33**
FORMAT
DATA
?
— Yes →

**S35**
FORMAT INFORMATION
UPDATE ROUTINE

No ↓

**S34**
PRINTABLE
TEXT ?
— Yes →

**S36**
DISPLAY IMAGE
GENERATION ROUTINE

No ↓

**S37**
DC ← (DC+1)

**S38**
SP + (DC×2) = EP ?   — No

Yes ↓

**S39**
CURSOR IMAGE GENERATION ROUTINE

**S40**
OUTPUT DISPLAY DOT IMAGE DATA

RETURN

24

# FIG. 8

```
        ┌────────────────────────────┐
        │  START MOVE CURSOR RIGHT    │
        │          ROUTING           │
        └────────────────────────────┘
                     │
                     ▼                    ⌒S50
        ┌────────────────────────────┐
        │   • KP ← (KP+2)            │
        │   • TP ← (TP+2)            │
        └────────────────────────────┘
                     │
                     ▼          ⌒S51
              ╱──────────────╲        No              ⌒S56
             ╱   KP ≦ RA      ╲──────────────┐
             ╲       ?        ╱               ▼
              ╲──────────────╱       ┌──────────────────┐
                   │ Yes             │    KP ← RA        │
                   ▼                 └──────────────────┘
              ╱──────────────╲  ⌒S52           │
             ╱     TP=        ╲               │
            ╱   CARRIAGE       ╲   Yes         │
            ╲   RETURN         ╱───────┐       │
             ╲   CODE         ╱        │       │
              ╲     ?        ╱         ▼       │
               ╲───────────╱    ┌──────────────────┐  ⌒S54
                   │ No         │   LC ← (LC+1)     │
                   │            └──────────────────┘
                   │                    │
                   │                    ▼            ⌒S55
                   │            ┌──────────────────┐
                   │            │  • KP ← (KP+2)   │
                   │            │  • TP ← (TP+2)   │
                   │            └──────────────────┘
                   │                    │
                   │◄───────────────────┴───────────┘
                   ▼              ⌒S53
        ┌────────────────────────────┐
        │     DKP ← MP (KP)          │
        └────────────────────────────┘
                   │
                   ▼
              ┌──────────┐
              │  RETURN  │
              └──────────┘
```

# FIG. 9

START MOVE CURSOR LEFT ROUTING

S60
- KP ← (KP−2)
- TP ← (TP−2)

S61
KP ≦ SA ? —— No →

S66
KP ← SA

Yes ↓

S62
TP= CARRIAGE RETURN CODE ? —— Yes →

S64
LC ← (LC−1)

S65
- KP ← (KP−2)
- TP ← (TP−2)

No ↓

S63
DKP ← MP (KP)

RETURN

26

# FIG. 10

```
START MOVE CURSOR DOWN
       ROUTINE
```

S70
LU ≧ MAX ?  — No
Yes

S73
$\triangle d = |\ MP\ (KP) - MP\ (GKP)\ |$

S74
$2M \leftarrow \triangle d$

S75
$1M \geqq 2M$ ?  — No
Yes

S76
• $1M \leftarrow 2M$
• $KA \leftarrow (GKP)$
• $TP \leftarrow$ ADDRESS
  CORRESPONDING
  TO GKP

S71
• $LC \leftarrow (LC+1)$
• $1M \leftarrow FF$

S72
• $GKP \leftarrow$ ADDRESS OF FIRST
  POSITION IN
  UNDERLYING ROW
• $TP \leftarrow$ ADDRESS OF FIRST
  CHARACTER IN
  UNDERLYING ROW

S77
$GKP =$ END OF ROW ?  — No
Yes

S78
• $KP \leftarrow KA$
• $DKP \leftarrow MP\ (KP)$

S79
$GKP \leftarrow (GKP+2)$

```
 RETURN
```

# FIG. 11

START MOVE CURSOR UP ROUTINE

S85
LC = 0 ? — No → S86

Yes

S88
$\Delta d = | MP (KP) - MP (GKP) |$

S89
$2M \leftarrow \Delta d$

S90
$1M > 2M$ ? — No

Yes

S91
- $1M \leftarrow 2M$
- $KA \leftarrow (GKP)$
- $TP \leftarrow$ ADDRESS CORRESPONDING TO GKP

S86
- $LC \leftarrow (LC-1)$
- $1M \leftarrow FF$

S87
- $GKP \leftarrow$ ADDRESS OF POSITION INFORMATION OF FIRST CHARACTER IN OVERLYING ROW
- $TP \leftarrow$ ADDRESS OF FIRST CHARACTER IN OVERLYING ROW

S92
GKP = END OF ROW ? — No → S94

Yes

S93
- $KP \leftarrow KA$
- $DKP \leftarrow MP (KP)$

S94
$GKP \leftarrow (GKP+2)$

RETURN

# FIG. 12

| | |
|---|---|
| SP → | STANDARD FORMAT INFORMATION | 61 |
| | A |
| TP → | B |
| | C |
| | D |
| | E |
| | F |
| | CARRIAGE RETURN CODE |
| | H |
| | I |
| TP1 → | J |
| | K |
| | L |
| | M |
| | CARRIAGE RETURN CODE |
| | V |
| | W |
| TP2 → | X |
| | Y |
| | Z |
| | CARRIAGE RETURN CODE |
| | 1 |
| | 2 |
| | 3 |
| TP3 → | 4 |
| EP → | 5 |

| | |
|---|---|
| 63 | --- SA |
| MPA (=0) |
| MPB |
| MPC | ← KP |
| MPD |
| MPE |
| MPF |
| MPr |
| MPH (=0) |
| MPI |
| MPJ |
| MPK | ← KP1 |
| MPL |
| MPM |
| MPr |
| MPV (=0) |
| MPW |
| MPX | ← KP2 |
| MPY |
| MPZ |
| MPr |
| MP1 (=0) |
| MP2 |
| MP3 |
| MP4 | ← KP3 |
| MP5 |
| MPα | --- RA |

FIG. 13

FIG. 14

FIG. 15

FIG. 16

ABCDEF
HIJKLM
VWXYZ
12345

22

K    K

# FIG. 17A

```
┌─────────────────────────────┐
│  START MOVE CURSOR RIGHT     │
│         ROUTING              │
└─────────────────────────────┘
              │
              ▼                 ╭─S50
      ┌─────────────────┐
      │ • KP ← (KP+2)   │
      │ • TP ← (TP+2)   │
      └─────────────────┘
              │
              ▼              ╭─S51
          ◇ KP ≦ RA ◇───No──────────┐
          ◇    ?    ◇                │
              │                      ▼        ╭─S56
            Yes                ┌──────────────┐
              │                │   KP ← RA    │
              ▼                └──────────────┘
       ◇ TP=        ◇  S52            │
       ◇ CARRIAGE   ◇──Yes──┐         │
       ◇ RETURN     ◇       │         │
       ◇ CODE       ◇       │         │
       ◇    ?       ◇       ▼      ╭─S54
              │        ┌──────────────┐      │
            No         │ LC ← (LC+1)  │      │
              │        └──────────────┘      │
              │               │              │
              │               ▼      ╭─S55   │
              │        ┌──────────────┐      │
              │        │ • KP ← (KP+2)│      │
              │        │ • TP ← (TP+2)│      │
              │        └──────────────┘      │
              │               │              │
              │◄──────────────┴──────────────┘
              │
              ▼        ╭─S53
      ┌──────────────────┐
      │ DKP ← MP (KP)    │
      └──────────────────┘
              │
              ▼        ╭─S200A
      ┌──────────────────┐
      │ MGP ← MP (KP)    │
      └──────────────────┘
              │
              ▼
        ┌───────────┐
        │  RETURN   │
        └───────────┘
```

# FIG. 17B

START MOVE CURSOR LEFT
ROUTING

S60
- KP ← (KP−2)
- TP ← (TP−2)

S61
KP ≦ SA
?
No → S66
KP ← SA

Yes ↓

S62
TP=
CARRIAGE
RETURN
CODE
?
Yes → S64
LC ← (LC−1)

S65
- KP ← (KP−2)
- TP ← (TP−2)

No ↓

S63
DKP ← MP (KP)

S200B
MGP ← MP (KP)

RETURN

# FIG. 18A

```
        START MOVE CURSOR DOWN
              ROUTINE
                 │
                 ▼
              ╱LC ≧ MAX╲        S270
    Yes   ╱      ?      ╲
   ◄──────╲            ╱
          ╲          ╱
             No │
                 ▼
          ┌──────────────────┐  S271
          │   LC ← (LC+1)    │
          └──────────────────┘
                 │
                 ▼                    S272
       ┌─────────────────────────────┐
       │ • GKP ← ADDRESS OF FIRST    │
       │         POSITION IN         │
       │         UNDERLYING ROW      │
       │ • TP  ← ADDRESS OF FIRST    │
       │         CHARACTER IN        │
       │         UNDERLYING ROW      │
       └─────────────────────────────┘
                 │◄───────────────────────────┐
   S273 ╲        ▼                             │
    ◄────▷ MP (GKP) ≧ MP (MGP) ? ◁──────── No  │
                 │                  │          │
              Yes │                 ▼          │
    ◄────────────┤         ╱ GKP=  ╲  S274     │
        Yes      │        ╱ END OF  ╲          │
     ◄───────────────────╲  ROW ?  ╱          │
                 │         ╲       ╱           │
                 ▼          No │                │
       ┌──────────────────────┐  S276          │
       │ • KP  ← (GKP)        │                │
       │ • TP  ← ADDRESS CORRESPONDING         │
       │         TO GKP       │                │
       │ • DKP ← MP (KP)      │                │
       └──────────────────────┘                │
                 │              ┌───────────────┴──┐  S275
                 │              │  GKP ← (GKP+2)   │
                 ▼              └──────────────────┘
             RETURN
```

# FIG. 18B

START MOVE CURSOR UP
ROUTINE

S285
LC = 0
?

Yes

No

S286
LC ← (LC−1)

S287
• GKP ← ADDRESS OF POSITION
  INFORMATION OF
  FIRST CHARACTER IN
  OVERLYING ROW
• TP ← ADDRESS OF FIRST
  CHARACTER IN
  OVERLYING ROW

S288
MP (GKP) ≥ MP (MGP) ?

No

Yes

S289
GKP=
END OF
ROW ?

Yes

No

S291
• KP ← (GKP)
• TP ← ADDRESS CORRESPONDING
        TO GKP
• DKP ← MP (KP)

S290
GKP ← (GKP+2)

RETURN

# FIG. 18C

| | 61 | | 63 | |
|---|---|---|---|---|
| SP → | STANDARD FORMAT INFORMATION | | MPA (=0) | ← SA |
| | A | | MPB | ← KP ← MGP |
| | B | | MPC | |
| TP → | C | | MPD | |
| | D | | MPE | |
| | E | | MPF | |
| | F | | MPr | |
| | CARRIAGE RETURN CODE | | MPH (=0) | |
| | H | | MPI | ← KP11 |
| | I | | MPJ | ← KP1 ← MGP |
| TP11 → | J | | MPK | |
| TP1 → | K | | MPL | |
| | L | | MPM | |
| | M | | MPr | |
| | CARRIAGE RETURN CODE | | MPV (=0) | |
| | V | | MPW | ← KP12 ← MGP |
| TP12 → | W | | MPX | ← KP2 |
| TP2 → | X | | MPY | |
| | Y | | MPZ | |
| | Z | | MPr | |
| | CARRIAGE RETURN CODE | | MP1 (=0) | |
| | 1 | | MP2 | ⌐ KP13 |
| | 2 | | MP3 | ← MGP |
| TP13 → | 3 | | MP4 | ← KP3 |
| TP3 → | 4 | | MP5 | ← RA |
| | 5 | | MPα | |
| EP → | | | | |

SVL

K

22

FIG. 19

ABCDEF
HIJKLM
VWXYZ
12345

SVL

K

22

FIG. 20

ABCDEF
HIJKLM
VWXYZ
12345

SVL

22

FIG. 21

A B C D E F
H I J K L M
V W X Y Z
1 2 3 4 5

K

SVL

22

FIG. 22

A B C D E F
H I J K L M
V W X Y Z
1 2 3 4 5

K

# FIG. 23

```
        ╭─────────────────────────╮
        │  START MOVE CURSOR DOWN │
        │        ROUTINE          │
        ╰─────────────────────────╯
                     │
                     ▼
              ◇ S300
         ╱ LC ≧ MAX ╲ ──── Yes ──────┐
         ╲    ?     ╱                 │
              │                       │
             No                       │
              │ S301                  │
              ▼                       │
      ┌─────────────────┐            │
      │  LC ← (LC+1)    │            │
      └─────────────────┘            │
              │ S302                  │
              ▼                       │
  ┌───────────────────────────┐      │
  │ • GKP ← ADDRESS OF LAST   │      │
  │        POSITION IN        │      │
  │        UNDERLYING ROW     │      │
  │ • TP  ← ADDRESS OF LAST   │      │
  │        CHARACTER IN       │      │
  │        UNDERLYING ROW     │      │
  └───────────────────────────┘      │
              │                       │
              ▼      S303             │
    ⬡ MP (GKP) ≦ MP (MGP) ? ⬡ ── No ──┐ │
              │                      │ │
             Yes                     ▼ │
              │              ◇ S304   │
              │◄── Yes ── ╱ GKP=    ╲  │
              │           ╲ START OF ╱  │
              │           ╲ LINE ?  ╱  │
              │                │       │
              │               No       │
              ▼ S306                    │
  ┌───────────────────────────┐        │
  │ • KP  ← (GKP)            │        │
  │ • TP  ← ADDRESS CORRESPONDING │    │
  │         TO GKP          │        │
  │ • DKP ← MP (KP)         │        │
  └───────────────────────────┘        │
              │                         ▼ S305
              │               ┌──────────────────┐
              │               │ GKP ← (GKP−2)   │
              │               └──────────────────┘
              │◄──────────────────────┘
              ▼
        ╭──────────╮
        │  RETURN  │
        ╰──────────╯
```

# FIG. 24

START MOVE CURSOR UP
ROUTINE

S310
LC = 0
?

Yes

No

S311
LC ← (LC−1)

S312
- GKP ← ADDRESS OF LAST
  POSITION IN
  OVERLYING ROW
- TP ← ADDRESS OF LAST
  CHARACTER IN
  OVERLYING ROW

S313
MP (GKP) ≦ MP (MGP) ?

Yes

No

S314
GKP=
START OF
LINE ?

Yes

No

S316
- KP ← (GKP)
- TP ← ADDRESS CORRESPONDING
       TO GKP
- DKP ← MP (KP)

S315
GKP ← (GKP−2)

RETURN

FIG. 25

SVL
K
22

A B C D E F
H I J K L M
V W X Y Z
1 2 3 4 5

FIG. 26

SVL
22

A B C D E F
H I J K L M
V W X Y Z
1 2 3 4 5
K

FIG. 27

SVL

22

A B C D E F
H I J K L M
V W X Y Z
1 2 3 4 5

K